# EUROPÄISCHE PATENTSCHRIFT

(11) **EP 3 913 337 B1**
(45) Veröffentlichungstag und Bekanntmachung des Hinweises auf die Patenterteilung: **15.10.2025**
(21) Anmeldenummer: 21171954.7
(22) Anmeldetag: 04.05.2021
(51) Int. Cl.: G01J 1/02, G01J 1/04, G01M 11/06, G01J 1/44, G01M 17/007

(54) **VERFAHREN UND VORRICHTUNG ZUR PHOTOMETRISCHEN VERMESSUNG EINES KENNZEICHENS FÜR EIN FAHRZEUG**
METHOD AND DEVICE FOR THE PHOTOMETRIC MEASUREMENT OF AN IDENTIFIER FOR A VEHICLE
PROCÉDÉ ET DISPOSITIF DE MESURE PHOTOMÉTRIQUE D'UNE PLAQUE D'IMMATRICULATION POUR UN VÉHICULE

(30) Priorität: 19.05.2020 DE 102020206275
(43) Veröffentlichungstag der Anmeldung: 24.11.2021
(73) Patentinhaber: TechnoTeam Holding GmbH, 98693 Ilmenau (DE)
(72) Erfinder: KRÜGER, Udo, 99837 Werra-Suhl-Tal OT Wünschensuhl (DE); SCHWANENGEL, Christian, 98693 Ilmenau (DE); THIELE, Tanja, 98693 Ilmenau (DE)
(74) Vertreter: Liedtke & Partner Patentanwälte

(56) Entgegenhaltungen:
- GB-A- 2 307 312
- JP-A- 2015 143 649
- ANONYMOUS: "Regelung Nr. 4 der Wirtschaftskommission der Vereinten Nationen für Europa (UN/ECE) - Einheitliche Bedingungen für die Genehmigung der Beleuchtungseinrichtungen für das hintere Kennzeichenschild von Kraftfahrzeugen und ihren Anhängern", AMTSBLATT DER EUROPÄISCHEN UNION L31/35, 31 January 2009 (2009-01-31), XP055849132, Retrieved from the Internet <URL:http://data.europa.eu/eli/reg/2009/4(2)/oj> [retrieved on 20211007]
- ANONYMOUS: "VIDEO PHOTOMETER LMK IMAGING LIGHT AND COLOUR MEASURING SYSTEMS", 1 January 2019 (2019-01-01), XP055849425, Retrieved from the Internet <URL:https://www.technoteamvision.com/apool/tnt/content/e5183/e5432/e5733/e8233/Prospekt2019_web1_eng.pdf> [retrieved on 20211008]
- HENNING KIEL: "Bewertung von Kraftfahrzeugscheinwerfern mit Lichtsimulation", 11 May 2012 (2012-05-11), pages 1 - 199, XP055375285, Retrieved from the Internet <URL:http://d-nb.info/1024884686/34> [retrieved on 20170523]

## Beschreibung

Die Erfindung betrifft ein Verfahren und eine Vorrichtung zur photometrischen Vermessung eines Kennzeichens für ein Fahrzeug.

Die Sichtbarkeit von beleuchteten Kennzeichen eines Fahrzeugs unterliegt gesetzlichen und normativen Regelungen, unter anderem die Normen ECER004, der chinesische Guobiao (GB) Standard GB 18408-2015 "Photometric characteristics of devices for the illumination of rear registration plates of motor vehicles and their trailers", der Society of Automotive Engineers (SAE) Standard SAE J578 "Color Specifications for Electrical Signal Lighting Devices" und weitere. Verfahren, mit denen die Einhaltung dieser Regelungen überprüft wird, umfassen punktuelle photometrische Vermessungen eines beleuchteten Kennzeichens.

Für eine standardisierte und vergleichbare Messung wird bei einem Messaufbau zur photometrischen Vermessung einer Kennzeichenleuchte, die zur Beleuchtung eines Kennzeichens an einem Fahrzeug vorgesehen und eingerichtet ist, das Kennzeichen durch eine Reflexionsnormal ersetzt, welches in geometrisch gleicher Weise wie das Kennzeichen ausgebildet und angeordnet ist. Das Reflexionsnormal wird auch als Reflexionsstandard bezeichnet.

Für die normative Prüfung der Beleuchtungssituation ist es vorteilhaft, wenn das Reflexionsnormal eine spektral neutrale und möglichst lambertsche, also diffus reflektierende Oberfläche aufweist. Es sind jedoch auch andere Reflexionseigenschaften möglich, welche vermessen und bei einer darauffolgenden Prüfung der Beleuchtungssituation berücksichtigt, beispielsweise korrigiert werden.

In einem aus dem Stand der Technik bekannten Messaufbau wird ein Reflexionsnormal von einer Kennzeichenleuchte oder von mehreren Kennzeichenleuchten beleuchtet, die in Bezug auf das Reflexionsnormal entsprechend der Baulage eines Kennzeichens im eingebauten (das heißt: am Fahrzeug montierten) Zustand angeordnet ist oder sind.

Dabei wird ein Photometer, das zur Messung photometrischer Kenngrößen, beispielsweise einer Leuchtdichte, eingerichtet ist, senkrecht zum Reflexionsnormal oder mindestens einem Teilbereich des Reflexionsnormals positioniert. Für gewisse, vorbestimmte Teilbereiche des Reflexionsnormals werden punktuelle Messwerte zusammengefasst, beispielsweise zu einem Integral- oder Mittelwert, und mit einem vorgegebenen photometrischen Sollwert verglichen.

Das Dokument JP 2015 143649 A beschreibt eine Vorrichtung und ein Verfahren zur photometrischen Vermessung eines Kraftfahrzeug-Kennzeichens, mit dem die Beleuchtungsstärke eines jeden Messpunktes auf einem Kennzeichen basierend auf Sicherheitsstandards für Straßenfahrzeuge ermittelt wird und darauf basierend eine Vielzahl von Kennzeichen vermessen wird. Die Vorrichtung umfasst ein Messgerät zur Messung der Beleuchtungsstärke, eine Messkamera zur Erfassung eines von einer Kennzeichenleuchte beleuchteten Kennzeichens oder eines Reflexionsnormals und eine Recheneinheit zur Berechnung einer Beleuchtungsstärke an einer von der Messkamera erfassten Position des Kennzeichens oder des Reflexionsnormals.

Das Dokument GB 2 307 312 A beschreibt eine Vorrichtung und ein Verfahren zur Ausrichtung eines Fahrzeugscheinwerfers nach einem standardisierten Bildmuster. Die Vorrichtung umfasst einen relativ zum Fahrzeug beweglichen Rahmen und ein höhenverstellbares Gehäuse mit einer Linse, die zur Fokussierung des Fahrzeugscheinwerferlichtes auf einen reflektierenden Schirm eingerichtet ist. Eine Kamera erfasst den reflektierenden Schirm. Eine Steuereinheit vergleicht Bereiche eines digitalisierten Kamerabildes mit einem standardisierten Bildmuster und ermittelt einen Korrelationsfaktor, der den Unterschied zwischen dem reflektierten Bild und dem standardisierten Bildmuster angibt. Basierend auf diesem Unterschied steuert die Steuereinheit eine Justiereinheit an, die mit dem beweglichen Rahmen gekoppelt werden kann und mittels der die Position des beweglichen Rahmens derart justiert wird, dass der Unterschied zwischen dem reflektierten Bild und dem standardisierten Bildmuster verschwindet.

Das Dokument Henning Kiel, Bewertung von Kraftfahrzeugscheinwerfern mit Lichtsimulation, Dissertation, eingereicht am 19. November 2011 an der Fakultät für Maschinenbau der Technischen Universität Ilmenau, XP055385285 beschreibt Verfahren der Lichtsimulation zur Entwicklung von Fahrzeugscheinwerfern, welche zur virtuellen Typprüfung solcher Fahrzeugscheinwerfer eingesetzt werden können. Der Erfindung liegt die Aufgabe zu Grunde, ein Verfahren zur verbesserten photometrischen Vermessung eines von mindestens einer Kennzeichenleuchte beleuchteten Reflexionsnormals anzugeben. Diese Aufgabe wird erfindungsgemäß mit einem Verfahren nach Anspruch 1 gelöst.

Der Erfindung liegt ferner die Aufgabe zu Grunde, ein Verfahren zur verbesserten mehrfachen photometrischen Vermessung mindestens eines von einer Kennzeichenleuchte beleuchteten Reflexionsnormals anzugeben. Diese Aufgabe wird erfindungsgemäß mit einem Verfahren nach Anspruch 12 gelöst. Der Erfindung liegt ferner die Aufgabe zu Grunde, eine Vorrichtung zur verbesserten photometrischen Vermessung eines von mindestens einer Kennzeichenleuchte beleuchteten Reflexionsnormals anzugeben. Diese Aufgabe wird erfindungsgemäß mit einer Vorrichtung nach Anspruch 13 gelöst.

Vorteilhafte Ausgestaltungen der Erfindung sind Gegenstand der Unteransprüche.

Bei einem Verfahren zur photometrischen Vermessung eines von einer Kennzeichenleuchte beleuchteten Reflexionsnormals für ein Fahrzeug wird eine mittels einer Steuereinheit auslösbare Kamera relativ zu einer für die Aufnahme eines Reflexionsnormals eingerichteten Haltevorrichtung derart angeordnet und ausgerichtet, dass ein von der Kamera aufgenommenes Leuchtdichtebild mindestens die reflektierende Oberfläche eines von der Haltevorrichtung aufgenommenen Reflexionsnormals überdeckt. Unter einem Leuchtdichtebild wird hierbei und im Folgenden eine digitale Beschreibung der Projektion einer Leuchtdichteverteilung auf die ebene Bildfläche eines Sensors, beispielsweise auf die Auffangebene einer Kamera, verstanden, wie von dem veröffentlichten Normentwurf zur Norm DIN 5032-10:2019-09 - Entwurf: Lichtmessung - Teil 10: Leuchtdichtemesskamera, Begriffe, Eigenschaften und deren Kennzeichnung vorgeschlagen.

Bevorzugt wird die Kamera so angeordnet und ausgerichtet, dass das damit aufgenommene Leuchtdichtebild die reflektierende Oberfläche des Reflexionsnormals vollständig überdeckt. In einer Ausführungsform des Verfahrens ist es auch möglich, die Kamera so anzuordnen und auszurichten, dass das damit aufgenommene Leuchtdichtebild die reflektierende Oberfläche des Reflexionsnormals in einem Teilbereich überdeckt, wobei der Teilbereich derart gewählt ist, dass aus dem diesen Teilbereich überdeckenden Leuchtdichtebild die Bestimmung einer photometrischen Kenngröße des Reflexionsnormals in einem von einer Norm oder einer gesetzlichen Vorgabe vorgeschriebenem Umfang möglich ist.

Die Kamera ist für die Aufnahme von Leuchtdichtebildern eingerichtet, welche die flächige (zweidimensionale) Verteilung einer photometrischen Kenngröße erfassen. Vorzugsweise ist die Kamera als Leuchtdichtemesskamera zur quantitativen, besonders bevorzugt zur rückgeführten Erfassung einer photometrischen Kenngröße eingerichtet.

Eine Kennzeichenleuchte, welche zur Beleuchtung des an einem Fahrzeug montierten Kennzeichens eingerichtet ist, wird in einer mittels der Steuereinheit bewegbaren Positioniereinrichtung angeordnet. Vorzugsweise wird die Kennzeichenleuchte in der Positioniereinrichtung eingespannt oder gehalten.

Das Reflexionsnormal wird in der Haltevorrichtung derart angeordnet, dass eine reflektierende Oberfläche des Reflexionsnormals von der Kamera erfasst wird.

In einer Ausführungsform des Verfahrens wird die Kamera unter einem beliebigen Winkel, insbesondere nicht notwendigerweise senkrecht zur reflektierenden Oberfläche des Reflexionsnormals ausgerichtet. Bei einer zur reflektierenden Oberfläche des Reflexionsnormals nicht senkrechten Anordnung der optischen Achse der Kamera ist eine photometrische und/oder geometrische Korrektur des von der Kamera aufgenommenen photometrischen Leuchtdichtebildes erforderlich.

Eine derartige Korrektur kann durch die Verwendung der bekannten Eigenschaften des Reflexionsnormals umgesetzt werden. Ferner wird die Geometrie des im Leuchtdichtebild erfassten Reflexionsnormals registriert, das heißt: mit der bekannten Geometrie des Reflexionsnormals in Übereinstimmung gebracht, und zur geometrischen Entzerrung genutzt.

In einer Ausführungsform wird die Messentfernung, das heißt: der Abstand zwischen der objektseitigen Hauptebene des Objektivs der Kamera und der reflektierenden Oberfläche des Reflexionsnormals, verkürzt, womit sich größere Betrachtungswinkel zum Rand des Reflexionsnormals hin ergeben. Die winkelabhängig unterschiedlichen Reflexionseigenschaften müssen entsprechend bekannt sein und können dann durch entsprechend ortsabhängige Wichtung korrigiert werden.

Erfindungsgemäß wird mittels der Steuereinheit die Positioniereinrichtung derart angesteuert, dass die in der Positioniereinrichtung angeordnete, beispielsweise eingespannte oder gehaltene, Kennzeichenleuchte an mindestens eine Position relativ zu dem in der Haltevorrichtung angeordneten Reflexionsnormal verfahren und an dieser Position gehalten wird. Optional wird die Positioniereinrichtung derart angesteuert, dass die Kennzeichenleuchte nacheinander an mehrere Positionen verfahren und dort jeweils gehalten wird.

In jeder der optional mehreren angefahrenen Positionen wird mittels der Steuereinheit die Kennzeichenleuchte eingeschaltet oder bleibt eingeschaltet, wenn sie bereits eingeschaltet war. Die Aufnahme eines Leuchtdichtebildes durch die Kamera wird ausgelöst, wenn die Kennzeichenleuchte über eine vorbestimmte Einbrenndauer durchgängig eingeschaltet war. Aus den in jeder der angefahrenen Positionen jeweils aufgenommenen Leuchtdichtebildern wird ein Gesamtbild gebildet.

Das Gesamtbild kann beispielsweise durch pixelweise Aufsummierung jedes aufgenommenen Leuchtdichtebildes gebildet werden. Es ist auch möglich, dass die einzelnen Leuchtdichtebilder gegeneinander registriert und/oder gefiltert, beispielsweise geglättet werden und das Gesamtbild aus der Mehrzahl der registrierten und/oder gefilterten Leuchtdichtebilder gebildet wird.

Bei einer Registrierung von Leuchtdichtebildern gegeneinander werden Pixelkoordinaten derart transformiert, beispielsweise durch Verschiebung und/oder Skalierung und/oder Rotation und/oder perspektivische Verzerrung oder durch eine affine Transformation, dass ein Ähnlichkeits- oder Übereinstimmungsmaß zwischen den registrierten Leuchtdichtebildern, beispielsweise ein korrelationsbasiertes Ähnlichkeitsmaß, maximiert wird. Dadurch wird die örtliche Genauigkeit der in dem Gesamtbild erfassten Leuchtdichteverteilung verbessert.

Bei einer Filterung können lineare Filter, beispielsweise ein Tiefpass zur Glättung oder ein Hochpass zur Kantenhervorhebung, auf die Leuchtdichtebilder angewendet werden. Es ist auch möglich, nichtlineare Filter, beispielsweise ein Medianfilter, auf die Leuchtdichtebilder anzuwenden. Auch Verfahren zur morphologischen Bildverarbeitung können angewendet werden, indem ein Leuchtdichtebild zunächst, beispielsweise durch Anwendung eines Schwellwertkriteriums, in ein Binärbild binarisiert wird, morphologische Operationen auf dem Binärbild ausgeführt werden und das verarbeitete Binärbild, beispielsweise als Maskierung, auf das Leuchtdichtebild zurück übertragen wird. Durch Filterung können Störungen und Artefakte, die beispielsweise durch Sensorrauschen bewirkt werden, vermindert werden.

Es ist auch möglich, Leuchtdichtebilder einer ortsabhängig, das heißt: an die Position eines Pixels gebundenen Verarbeitung zu unterziehen. Dadurch ist es möglich, Imperfektionen in der Kamera und/oder im Reflexionsnormal zu kompensieren, deren örtliche Verteilung im Leuchtdichtebild bekannt ist. Beispielsweise ist es möglich, einen durch das Kameraobjektiv bewirkten Randabfall der auf den Sensor der Kamera auftreffenden Beleuchtung zu kompensieren.

Es ist auch möglich, pixelweise Unterschiede des vom Reflexionsnormal reflektierten und von der Kamera eingefangenen Lichts zu kompensieren, die insbesondere bei geringem Abstand zwischen der Hauptebene des Kameraobjektivs und der reflektierenden Oberfläche des Reflexionsnormals aus einer winkelabhängigen, das heißt: nicht perfekt diffusen Reflektivität resultieren. Dadurch sind Messaufbauten mit geringeren Anforderungen an die optische Qualität der Kamera und des Reflexionsnormals möglich.

Auch Kombinationen verschiedener Verfahren zur Transformation und Filterung von Leuchtdichtebildern sind möglich.

Ferner ist es möglich, an jeder der angefahrenen Positionen eine Mehrzahl von Leuchtdichtebildern aufzunehmen und daraus ein Leuchtdichtebild mit erhöhtem Dynamikbereich (HDR, high dynamic range) zu bilden. Es ist auch möglich, durch die Erfassung von Leuchtdichtebildern mit jeweils gleicher Integrationszeit den Rauscheinfluss eines Bildsensors zu reduzieren.

Das so gebildete Gesamtbild stellt die Verteilung der mittels der Kamera in jedem einzelnen Leuchtdichtebild erfassten photometrischen Kenngröße dar, die sich dann ergeben würde, wenn das Reflexionsnormal simultan von Kennzeichenleuchten beleuchtet werden würde, die jeweils an den von der Positioniereinrichtung angefahrenen Positionen verteilt angeordnet sind.

Durch das vorgeschlagene Verfahren kann somit die Verteilung dieser photometrischen Kenngröße für ein Reflexionsnormal ermittelt werden, das an einem Fahrzeug angeordnet ist und von ebenfalls an diesem Fahrzeug angeordneten mehreren Kennzeichenleuchten beleuchtet wird. Hierzu muss lediglich die einzige in dem photometrischen Vermessungsverfahren eingesetzte Kennzeichenleuchte nacheinander an die Relativpositionen (bezogen auf das in der Haltevorrichtung gehaltene Reflexionsnormal) verfahren werden, die den Relativpositionen der am Fahrzeug angeordneten mehreren Kennzeichenleuchten (bezogen auf das ebenfalls am Fahrzeug angeordnete Kennzeichen) entsprechen.

Ein Vorteil des Verfahrens besteht darin, dass die flächige Vermessung der photometrischen Kenngröße in jeweils einem Schritt durch die Aufnahme eines Leuchtdichtebildes erfolgt. Somit kann das zeitaufwändige punktweise Messen der reflektierenden Oberfläche des Reflexionsnormals mit einem Photometer eingespart werden.

Ein weiterer Vorteil des Verfahrens besteht darin, dass durch die mittels der Steuereinheit verfahrbare (das heißt: programmierbar verfahrbare) Positioniereinrichtung unterschiedlichste Anordnungen von Kennzeichenleuchten in Bezug auf ein Reflexionsnormal ohne Änderung des Messablaufs in ihrer Wirkung auf die Verteilung der photometrischen Kenngröße vermessen werden können. Insbesondere können Beleuchtungssituationen für verschiedene geometrische Abmessungen eines Reflexionsnormals und für verschiedene Anordnungen von Kennzeichenleuchten relativ zu einem Reflexionsnormal sehr leicht und schnell vermessen werden.

Beispielsweise kann für ein von mindestens einer Kennzeichenleuchte beleuchtetes Reflexionsnormal die Verteilung der photometrischen Kenngröße ermittelt werden, die sich bei verschiedenen Fahrzeugtypen und/oder bei verschiedenen Baureihen eines Fahrzeugtyps ergibt, welche sich in der Anordnung der mindestens einen Kennzeichenleuchte relativ zum Reflexionsnormal voneinander unterscheiden. Insbesondere müssen für eine solche Abfolge von Messungen weder das Reflexionsnormal noch die Kennzeichenleuchte neu montiert werden.

Somit können mit dem erfindungsgemäßen Verfahren unterschiedlichste geometrische Anordnungen einer Kennzeichenleuchte oder mehrerer Kennzeichenleuchten an einem Fahrzeug hinsichtlich ihrer Eignung für die normgerechte Beleuchtung von Kennzeichen sehr leicht und schnell geprüft werden. Es ist zudem besonders leicht möglich, auch neue oder abgeänderte geometrische Anordnungen von Kennzeichenleuchten hinsichtlich der damit erzielten Beleuchtungsqualität zu bewerten. Insbesondere ist bei der Änderung einer zu prüfenden geometrischen Anordnung der mindestens einen Kennzeichenleuchte keine physische Demontage und Montage erforderlich, sondern es kann diese Änderung durch Umprogrammierung oder Parametrisierung der Steuereinheit vollzogen werden.

Bei einer Ausführungsform des Verfahrens wird das Reflexionsnormal relativ zur Kamera so angeordnet, dass jeder Punkt auf dessen reflektierender Oberfläche unter einem Winkel von höchstens 40 Grad, bevorzugt unter einem Winkel von höchstens 5 Grad relativ zur optischen Achse der Kamera erscheint. Bei dieser Ausführungsform wird jedes Leuchtdichtebild durch projektive Entzerrung an die Geometrie der reflektierenden Oberfläche des Reflexionsnormals angepasst.

Beispielsweise wird ein Leuchtdichtebild derart projektiv entzerrt, dass die darin umfasste Kontur der Abbildung des Reflexionsnormals mit der Kontur des Reflexionsnormals übereinstimmt. Beispielsweise werden bei einer rechteckig geformten reflektierenden Oberfläche des Reflexionsnormals die vier Eckpunkte der im Allgemeinen projektiv verzerrten Abbildung dieser Oberfläche in dem Leuchtdichtebild erkannt und daraus eine projektive Entzerrung ermittelt, welche die Koordinaten dieser Eckpunkte derart transformiert, dass ein Rechteck aufgespannt wird, welches das gleiche Seitenverhältnis aufweist wie die reflektierende Oberfläche oder welches, unter Berücksichtigung des Abbildungsmaßstabs der Kamera, größengleich zu dieser ist.

Ein Vorteil dieser Ausführungsform besteht darin, dass die Justierung der Kamera relativ zum Reflexionsnormal (und somit auch relativ zur Haltevorrichtung) erheblich vereinfacht wird, da Abweichungen der optischen Achse der Kamera von der Flächennormalen auf dem Reflexionsnormal sehr einfach durch die projektive Entzerrung korrigiert werden können.

Bei einer Ausführungsform des Verfahrens wird mittels der Kamera mindestens ein Leuchtdichtebild aufgenommen, wenn die Kennzeichenleuchte in einer ersten Position angeordnet ist. Aus diesem mindestens einen mittels der Kamera aufgenommenen Leuchtdichtebild wird rechnerisch mindestens ein berechnetes Leuchtdichtebild für mindestens eine zweite oder weitere Position der Kennzeichenleuchte ermittelt. Mit anderen Worten: aus dem Leuchtdichtebild, das bei Beleuchtung des Reflexionsnormals mit der in der ersten Position angeordneten Kennzeichenleuchte aufgenommen wird, wird rechnerisch mindestens ein Leuchtdichtebild ermittelt, das bei Beleuchtung des Reflexionsnormals mit der Kennzeichenleuchte in einer zweiten beziehungsweise weiteren Position beobachtet werden würde.

Ein berechnetes Leuchtdichtebild kann beispielsweise aus einem aufgenommenen Leuchtdichtebild gewonnen werden, indem Symmetriebeziehungen zwischen der ersten Position und der zweiten beziehungsweise den weiteren Positionen der Kennzeichenleuchte ausgenutzt werden. Beispielsweise kann, wenn die erste und die zweite Position der Kennzeichenleuchte symmetrisch zu einer Symmetrieebene sind, die senkrecht auf dem Reflexionsnormal steht, ein berechnetes Leuchtdichtebild dadurch gewonnen werden, dass ein in der ersten Position aufgenommenes Leuchtdichtebild an einer Symmetrieachse gespiegelt wird, entlang welcher die Symmetrieebene die reflektierende Oberfläche des Reflexionsnormals schneidet.

Alternativ oder zusätzlich kann ein berechnetes Leuchtdichtebild durch Verschiebung eines aufgenommenen Leuchtdichtebildes um eine dem Abstand zwischen der ersten und der zweiten beziehungsweise weiteren Position der Kennzeichenleuchte entsprechende Verschiebung gewonnen werden.

Das Gesamtbild wird durch Überlagerung der aufgenommenen Leuchtdichtebilder und des mindestens einen berechneten Leuchtdichtebildes gebildet.

Ein Vorteil dieser Ausführungsform besteht darin, dass die zweite oder weitere Position der Kennzeichenleuchte nicht angefahren und dort kein Leuchtdichtebild aufgenommen werden muss. Dadurch kann die Messdauer erheblich verkürzt werden.

Bei einer Ausführungsform des Verfahrens wird die Aufnahme eines Leuchtdichtebildes an einer angefahrenen Position erst dann ausgelöst, wenn die Kennzeichenleuchte für mindestens eine vorbestimmte Einbrenndauer eingeschaltet war. Die Kennzeichenleuchte kann nach Erreichen der angefahrenen Position für mindestens die Einbrenndauer eingeschaltet werden und nach dem anschließenden Aufnehmen von mindestens einem Leuchtdichtebild in dieser Position wieder ausgeschaltet werden. In vorteilhafter Weise ist es aber auch möglich, die Kennzeichenleuchte einmalig vor dem Auslösen der Aufnahme des ersten Leuchtdichtebildes an der ersten angefahrenen Position einzuschalten und bis zur Aufnahme des letzten Leuchtdichtebildes an der letzten angefahrenen Position eingeschaltet zu belassen.

Während der Einbrenndauer der Kennzeichenleuchte kann die Verteilung einer photometrischen Kenngröße im Bereich des Reflexionsnormals variieren, beispielsweise geometrisch und/oder in der spektralen Charakteristik. Durch diese Ausführungsform wird ein Einfluss solcher Variationen auf das Messergebnis ausgeschlossen oder stark vermindert.

Es ist möglich, dass Leuchtdichtebilder und somit auch das daraus gebildete Gesamtbild auch Bereiche außerhalb des Reflexionsnormals abdecken. In einer Ausführungsform des Verfahrens werden in dem Teilbereich des Gesamtbildes, der die reflektierende Oberfläche des Reflexionsnormals abdeckt, Bildbereiche festgelegt. Zu jedem Bildbereich wird jeweils ein Bildbereichsmittelwert ermittelt. Der Bildbereichsmittelwert kann als gewichtete Summe aller Pixelwerte des jeweiligen Bildbereichs gebildet werden. Beispielsweise kann der Bildbereichsmittelwert dadurch gebildet werden, dass eine Summe von Pixelwerten in einem Teilbereich jeweils auf die Fläche (das heißt: die Anzahl der Pixel) des jeweiligen Teilbereichs bezogen wird.

Die Bildbereiche können nichtüberlappend in dem Teilbereich des Gesamtbildes, der die reflektierende Oberfläche des Reflexionsnormals abdeckt, angeordnet sein. Es ist aber auch möglich, dass sich derartige Bildbereiche teilweise überlappen.

Ein Vorteil dieser Ausführungsform besteht darin, dass anstelle einer flächigen Verteilung einer photometrischen Kenngröße nur ein reduzierter Satz photometrischer Parameter (Menge der den Bildbereichen zugeordneten Bildbereichsmittelwerte) ermittelt wird, der zur Prüfung der normativ oder regulatorisch vorgeschriebenen Beleuchtungssituation für das Reflexionsnormal ausreicht und diese vereinfacht. Insbesondere kann dadurch eine Übereinstimmung mit normativen oder regulatorischen Vorgaben unabhängig von der Auflösung und Einstellung der Kamera, insbesondere unabhängig von deren Chipgröße und Abbildungsmaßstab, geprüft werden.

Bei einer Ausführungsform des Verfahrens wird das in der Haltevorrichtung gehaltene Reflexionsnormal automatisch identifiziert.

Die Identifikation des Reflexionsnormals kann beispielsweise mittels eines darauf angeordneten RFID Transponders erfolgen. RFID Transponder sind leicht und zuverlässig auslesbar und können leicht an der für die optische Messung nicht sichtbaren Rückseite eines Reflexionsnormals angeordnet werden.

Alternativ oder zusätzlich kann die Identifizierung dadurch erfolgen, dass die Abbildung des Reflexionsnormals in einem Leuchtdichtebild oder in dem Gesamtbild unter Berücksichtigung eines bekannten Abbildungsmaßstabs und/oder einer bekannten geometrischen Verzerrung der Kamera mit bekannten Abmessungen von Typen von Reflexionsnormalen in Übereinstimmung gebracht wird und der Typ zugeordnet wird, welcher die beste Übereinstimmung ergibt. In vorteilhafter Weise kann so eine Identifizierung ohne zusätzlichen Hardwareaufwand erfolgen.

Aus der Identifizierung des Reflexionsnormals werden die normativ oder regulatorisch vorgeschriebenen oder beliebig gewählten Bildbereiche ermittelt, für die jeweils ein Bildbereichsmittelwert bestimmt wird.

Dadurch ist es möglich, jeweils einem Reflexionsnormal eine Norm oder Regel zuzuordnen, nach der die Verteilung der photometrischen Kenngröße bestimmt werden soll.

Bei einer Ausführungsform des Verfahrens wird in einem Validierungsschritt ein zur Vermessung eines Reflexionsnormals geeigneter Bewegungsablauf der Positioniereinrichtung mit der darin angeordneten Kennzeichenleuchte relativ zu der Haltevorrichtung geplant.

In dem Validierungsschritt wird dieser Bewegungsablauf relativ zu einem Messdummy ausgeführt. Mit anderen Worten: die Positioniereinrichtung wird so verfahren, dass die darin gehaltene Kennzeichenleuchte relativ zu dem Messdummy genau so angeordnet ist, wie sie bei der Vermessung mit dem geplanten Bewegungsablauf gegenüber der Haltevorrichtung mit dem darin gehaltenen Reflexionsnormal angeordnet wäre.

Das Messdummy ist in den äußeren Abmessungen baugleich zu der Haltevorrichtung mit dem darin gehaltenen Reflexionnormal und derart ausgebildet, dass bei einer Kollision der Positioniereinrichtung und/oder der Kennzeichenleuchte mit dem Messdummy die Positioniereinrichtung und die Kennzeichenleuchte unbeschädigt bleiben. Beispielsweise ist das Messdummy aus einem flexiblen Kunststoff gefertigt, der bei Berührung nachgibt. Alternativ oder zusätzlich kann das Messdummy auch aus einem Material gefertigt sein, das bereits unter Einwirkung einer Kraft zerstört wird, welche zur Beschädigung der Positioniereinrichtung oder der Kennzeichenleuchte noch nicht ausreicht.

Das Messdummy ist ferner so angeordnet, dass bei dem relativ zu dem Messdummy ausgeführten geplanten Bewegungsablauf eine Kollision mit der Haltevorrichtung und/oder mit dem Reflexionsnormal ausgeschlossen ist. Ferner ist es so angeordnet, dass bei dem relativ zu der Haltevorrichtung ausgeführten Bewegungsablauf eine Kollision mit dem Messdummy ausgeschlossen ist.

Bei dieser Ausführungsform wird die Vermessung des Reflexionsnormals erst nach einem erfolgreich durchgeführten Validierungsschritt freigeschaltet. Ein Validierungsschritt ist erfolgreich durchgeführt, wenn bei dem relativ zu dem Messdummy ausgeführten geplanten Bewegungsablauf die Positioniereinrichtung und die Kennzeichenleuchte nicht mit dem Messdummy kollidiert sind.

Ein Vorteil dieser Ausführungsform besteht darin, dass auf besonders kostengünstige und sichere Weise Fehler bei der Planung des Bewegungsablaufs der Positioniereinrichtung vor einer Vermessung festgestellt werden können. Dadurch können Schäden vermieden werden, die durch einen fehlerhaft geplanten Bewegungsablauf an der Positioniereinrichtung, der Kennzeichenleuchte, der Haltevorrichtung und/oder dem Reflexionsnormal verursacht werden könnten.

Eine Vorrichtung zur photometrischen Vermessung eines Reflexionsnormals für ein Fahrzeug umfasst eine Steuereinheit, eine Haltevorrichtung, die zur Aufnahme eines Reflexionsnormals eingerichtet ist, und eine Kamera, die zur Aufnahme von Leuchtdichtebildern eines in der Haltevorrichtung gehaltenen Reflexionsnormals eingerichtet ist. Erfindungsgemäß umfasst die Vorrichtung ferner eine Positioniereinrichtung, die zur Aufnahme, vorzugsweise zum Einspannen oder zum Halten, einer Kennzeichenleuchte eingerichtet ist.

In einer Ausführungsform der Vorrichtung ist die Kamera unter einem beliebigen Winkel, insbesondere nicht notwendigerweise senkrecht zur reflektierenden Oberfläche des Reflexionsnormals ausgerichtet. Bei einer zur reflektierenden Oberfläche des Reflexionsnormals nicht senkrechten Anordnung der optischen Achse der Kamera ist eine photometrische und/oder geometrische Korrektur des von der Kamera aufgenommenen photometrischen Leuchtdichtebildes erforderlich.

Eine derartige Korrektur kann durch die Verwendung der bekannten Eigenschaften des Reflexionsnormals umgesetzt werden. Ferner wird die Geometrie des im Leuchtdichtebild erfassten Reflexionsnormals registriert, das heißt: mit der bekannten Geometrie des Reflexionsnormals in Übereinstimmung gebracht, und zur geometrischen Entzerrung genutzt.

In einer Ausführungsform wird die Messentfernung, das heißt: der Abstand zwischen der objektseitigen Hauptebene des Objektivs der Kamera und der reflektierenden Oberfläche des Reflexionsnormals, verkürzt, womit sich größere Betrachtungswinkel zum Rand des Reflexionsnormals hin ergeben. Die winkelabhängig unterschiedlichen Reflexionseigenschaften müssen entsprechend bekannt sein und können dann durch entsprechend ortsabhängige Wichtung korrigiert werden.

Die Steuereinheit ist mit der Kamera und mit der Positioniereinrichtung verbunden und dafür eingerichtet, eine von der Positioniereinrichtung aufgenommene Kennzeichenleuchte an mindestens eine vorbestimmte Position, optional nacheinander an mehrere vorbestimmte Positionen, relativ zu der Haltevorrichtung zu verfahren und einzuschalten. Die Steuereinheit ist ferner zum Auslösen der Aufnahme mindestens eines Leuchtdichtebildes durch die Kamera eingerichtet.

Ferner sind/ist die Steuereinheit und/oder die Kamera zur Ermittlung eines Gesamtbildes aus den von der Kamera aufgenommenen Leuchtdichtebildern nach einem der bereits beschriebenen Verfahren eingerichtet.

Das so gebildete Gesamtbild stellt die Verteilung der mittels der Kamera in jedem einzelnen Leuchtdichtebild erfassten photometrischen Kenngröße dar, die sich dann ergeben würde, wenn das Reflexionsnormal simultan von Kennzeichenleuchten beleuchtet werden würde, die jeweils an den von der Positioniereinrichtung angefahrenen Positionen verteilt angeordnet sind.

Mittels der vorgeschlagenen Vorrichtung kann somit die Verteilung dieser photometrischen Kenngröße für ein Reflexionsnormal ermittelt werden, das an einem Fahrzeug angeordnet ist und von ebenfalls an diesem Fahrzeug angeordneten mehreren Kennzeichenleuchten beleuchtet wird. Hierzu muss lediglich eine in der Positioniereinrichtung angeordnete (beispielsweise eingespannte oder gehaltene) Kennzeichenleuchte nacheinander an die Relativpositionen (bezogen auf das in der Haltevorrichtung gehaltene Reflexionsnormal) verfahren werden, die den Relativpositionen der am Fahrzeug angeordneten mehreren Reflexionsnormale (bezogen auf das ebenfalls am Fahrzeug angeordnete Kennzeichen) entsprechen und die von der Steuereinheit vorgegeben werden.

Ein Vorteil der Vorrichtung besteht darin, dass damit die flächige Vermessung der photometrischen Kenngröße in jeweils einem Schritt durch die Aufnahme eines Leuchtdichtebildes erfolgt. Somit kann das zeitaufwändige Abscannen der reflektierenden Oberfläche des Reflexionsnormals mit einem punktweise messenden Photometer eingespart werden.

Ein weiterer Vorteil der Vorrichtung besteht darin, dass durch die mittels der Steuereinheit verfahrbare (das heißt: programmierbar verfahrbare) Positioniereinrichtung unterschiedlichste Anordnungen von Kennzeichenleuchten in Bezug auf ein Reflexionsnormal ohne Änderung des Messablaufs in ihrer Wirkung auf die Verteilung der photometrischen Kenngröße vermessen werden können. Insbesondere können Beleuchtungssituationen für verschiedene geometrische Abmessungen eines Reflexionsnormals und für verschiedene Anordnungen von Kennzeichenleuchten relativ zu einem Reflexionsnormal sehr leicht und schnell vermessen werden.

Beispielsweise kann für ein Reflexionsnormal die Verteilung der photometrischen Kenngröße ermittelt werden, die sich bei verschiedenen Fahrzeugtypen und/oder bei verschiedenen Baureihen eines Fahrzeugtyps ergibt, welche sich in der Anordnung der mindestens einen Kennzeichenleuchte relativ zum Reflexionsnormal voneinander unterscheiden. Insbesondere müssen für eine solche Abfolge von Messungen weder das Reflexionsnormal noch die Kennzeichenleuchte neu montiert werden.

Somit können mit der erfindungsgemäßen Vorrichtung unterschiedlichste geometrische Anordnungen einer Kennzeichenleuchte oder mehrerer Kennzeichenleuchten an einem Fahrzeug hinsichtlich ihrer Eignung für die normgerechte Beleuchtung von Kennzeichen sehr leicht und schnell geprüft werden. Es ist zudem besonders leicht möglich, auch neue oder abgeänderte geometrische Anordnungen von Kennzeichenleuchten hinsichtlich der damit erzielten Beleuchtungsqualität zu bewerten. Insbesondere ist bei der Änderung einer zu prüfenden geometrischen Anordnung der mindestens einen Kennzeichenleuchte keine physische Demontage und Montage erforderlich, sondern es kann diese Änderung durch Umprogrammierung oder Parametrisierung der Steuereinheit vollzogen werden.

Bei einer Ausführungsform der Vorrichtung umfasst die Haltevorrichtung einen Haltesockel und eine Haltefassung, wobei der Haltesockel zur lösbaren, formschlüssig-spielfreien Aufnahme der Haltefassung ausgebildet ist und wobei die Haltefassung zur Aufnahme eines Reflexionsnormals eingerichtet ist. Diese Ausführungsform erlaubt es, das zu vermessende Reflexionsnormal besonders leicht, insbesondere ohne weitere Montageschritte und ohne Werkzeuge, auszuwechseln. Diese Ausführungsform ist daher besonders für die photometrische Vermessung vieler unterschiedlicher geometrischer Abmessungen von Reflexionsnormalen geeignet.

Bei einer Ausführungsform der Vorrichtung sind der Haltesockel und/oder die Haltefassung magnetisch aneinander koppelbar ausgebildet. Diese Ausführungsform ermöglicht eine feste, gut reproduzierbare Aufnahme des Reflexionsnormals an der Haltevorrichtung und zugleich eine besonders leichte Auswechselbarkeit des Reflexionsnormals.

Bei einer Ausführungsform der Vorrichtung ist an der Haltefassung ein RFID Transponder angeordnet, der die Identifizierung des in der Haltevorrichtung gehaltenen Reflexionsnormals ermöglicht. Dadurch kann eine manuelle Identifizierung des aktuell mittels der Vorrichtung vermessenen Reflexionsnormals und somit auch der Norm oder des Standards für eine daran durchgeführte Messung eingespart und der Messvorgang beschleunigt werden. Zudem wird die Gefahr, dass Messergebnisse einem falschen Reflexionsnormal und somit einer falschen Norm oder einem falschen Standard zugeordnet werden, beseitigt oder verringert.

Bei einer Ausführungsform der Vorrichtung umfasst die Haltevorrichtung ein RFID Lesegerät, das mit der Steuereinheit verbunden ist und das zum Auslesen eines Identifikators eines an dem Reflexionsnormal oder an der Haltefassung angeordneten RFID Transponders und zur Übertragung dieses Identifikators an die Steuereinheit eingerichtet ist, wobei die Steuereinheit dafür eingerichtet ist, aus einem übertragenen Identifikator die mindestens eine bei der Messung anzuwendende Norm zur Prüfung der normativ oder regulatorisch vorgeschriebenen Beleuchtungssituation für das Reflexionsnormal zu ermitteln.

Bei einer Ausführungsform der Vorrichtung ist die Steuereinheit dafür eingerichtet, aus den von der Kamera aufgenommenen Leuchtdichtebildern geometrische Informationen zu dem aufgenommenen Reflexionsnormal zu ermitteln. Beispielsweise ist die Steuereinheit dafür eingerichtet, einen Umriss und daraus abgeleitete Merkmale (Seitenlängen, Seitenverhältnis) aus einem Leuchtdichtebild zu ermitteln. Es ist auch möglich, dass eine Bestimmung derartiger geometrischer Parameter in einer Kamera erfolgt, die beispielsweise als Smart-Kamera ausgebildet ist. Unter einer Smart-Kamera (oder intelligenten Kamera) wird hier und im Folgenden ein Kameratyp verstanden, der über einen internen Prozessor verfügt, auf dem Bildverarbeitungsoperationen durchgeführt werden können. Somit können von einer Smart-Kamera auch aus einem Rohbild abgeleitete (verarbeitete) Informationen ermittelt und ausgegeben werden. In diesem Fall sind die Kamera und die Steuereinheit miteinander zur Übertragung derartiger geometrischer Parameter verbunden.

Aus den derart ermittelten geometrischen Parametern können die Position und/oder die Ausrichtung des Reflexionsnormals relativ zur Kamera ermittelt werden. Beispielsweise kann die Steuereinheit mittels einer projektiven Entzerrung das tatsächlich aufgenommene Leuchtdichtebild in ein entzerrtes Leuchtdichtebild umrechnen, welches bei senkrecht zur optischen Achse der Kamera ausgerichtetem Reflexionsnormal aufgenommen worden wäre. Ferner kann aus den geometrischen Parametern der Typ des aufgenommenen Reflexionsnormals bestimmt werden.

In einer Ausführungsform umfasst eine Vorrichtung ein Messdummy, das in den äußeren Abmessungen baugleich zu der Haltevorrichtung mit dem darin aufgenommenen Reflexionsnormal gestaltet ist.

Das Messdummy ist derart ausgebildet, dass bei einer Kollision der Positioniereinrichtung und/oder der Kennzeichenleuchte mit dem Messdummy die Positioniereinrichtung und die Kennzeichenleuchte unbeschädigt bleiben. Beispielsweise ist das Messdummy aus einem flexiblen Kunststoff gefertigt, der bei Berührung nachgibt. Alternativ oder zusätzlich kann das Messdummy auch aus einem Material gefertigt sein, das bereits unter Einwirkung einer Kraft zerstört wird, welche zur Beschädigung der Positioniereinrichtung oder der Kennzeichenleuchte noch nicht ausreicht.

Das Messdummy ist so angeordnet, dass bei dem relativ zu der Haltevorrichtung ausgeführten Bewegungsablauf zur Vermessung eines Reflexionsnormals eine Kollision mit dem Messdummy ausgeschlossen ist.

Ferner ist das Messdummy so angeordnet, dass bei einem Bewegungsablauf, der relativ zu dem Messdummy ausgeführt wird, sonst aber zu dem Bewegungsablauf wie bei der Vermessung eines Reflexionsnormals gleich ist, eine Kollision mit der Haltevorrichtung und/oder mit dem Reflexionsnormal ausgeschlossen ist.

Ein Vorteil dieser Ausführungsform besteht darin, dass auf besonders kostengünstige und sichere Weise Fehler bei der Planung des Bewegungsablaufs der Positioniereinrichtung vor einer Vermessung festgestellt werden können. Dadurch können Schäden vermieden werden, die durch einen fehlerhaft geplanten Bewegungsablauf an der Positioniereinrichtung, der Kennzeichenleuchte, der Haltevorrichtung und/oder dem Reflexionsnormal verursacht werden könnten.

Ausführungsbeispiele der Erfindung werden im Folgenden anhand von Zeichnungen näher erläutert. Darin zeigen:
- Figur 1: schematisch ein Kraftfahrzeug mit daran angeordnetem Kennzeichen,
- Figur 2: schematisch eine Messvorrichtung für die photometrische Vermessung eines von einer Kennzeichenleuchte beleuchteten Reflexionsnormals,
- Figuren 3A, 3B: schematisch eine Positioniereinrichtung zur Positionierung einer Kennzeichenleuchte in einer ersten und in einer zweiten Position,
- Figuren 4A, 4B: schematisch das in der ersten und in der zweiten Position aufgenommene Leuchtdichtebild des beleuchteten Reflexionsnormals,
- Figur 5: schematisch das aufsummierte Gesamtbild des beleuchteten Reflexionsnormals,
- Figur 6: schematisch die Anordnung von Bildbereichen im Gesamtbild des beleuchteten Reflexionsnormals,
- Figur 7: schematisch eine Haltevorrichtung mit daran angeordnetem Haltesockel und einer abnehmbaren Haltefassung,
- Figur 8 und 9: schematisch die Übertragung eines Leuchtdichtebildes von einer ersten auf eine zweite Position sowie
- Figur 10: die Anordnung einer Haltevorrichtung und eines Messdummys um eine Positioniereinrichtung.

Einander entsprechende Teile sind in allen Figuren mit den gleichen Bezugszeichen versehen.

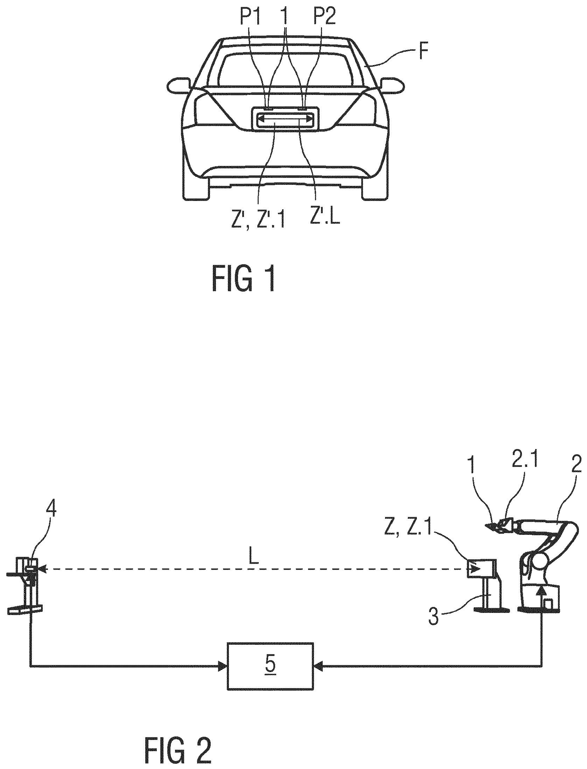

**Figur** 1 zeigt ein Fahrzeug F mit einem daran angeordneten Kennzeichen Z'. Das Kennzeichen Z' weist eine reflektierende Oberfläche Z'.1 auf und wird von zwei Kennzeichenleuchten 1 beleuchtet, die oberhalb des Kennzeichens Z' entlang einer Längsrichtung Z'.L verteilt an einer ersten Position P1 und an einer zweiten Position P2 angeordnet sind. Die Positionen P1, P2 beschreiben dabei die relative Lage jeweils einer Kennzeichenleuchte 1 in Bezug auf das Kennzeichen Z'.

Die Kennzeichenleuchten 1 müssen derart ausgebildet und angeordnet sein, dass das von den Kennzeichenleuchten 1 an der reflektierenden Oberfläche Z'.1 reflektierte Licht für das Ablesen des Kennzeichens Z' bei Dunkelheit aus einer Entfernung von etwa 10 bis 20 Metern ausreicht. Die vom Kennzeichen Z' unter Beleuchtung durch die Kennzeichenleuchten 1 reflektierte Lichtverteilung ist durch Normen festgelegt. Aus dem Stand der Technik sind Messverfahren zur Bestimmung der Einhaltung solcher Normen bekannt, bei denen ein Photometer in einem vorbestimmten Abstand rasterartig über ein beleuchtetes Reflexionsnormal Z hinweg bewegt wird und an vorbestimmten Messpunkten mindestens einen photometrischen Parameter, beispielsweise eine Leuchtdichte, erfasst. Reflexionsnormale Z sind geometrisch gleich zu Kennzeichen Z' ausgebildet, weisen jedoch keine aufgedruckten oder aufgeprägten Zeichen auf. Zur Verbesserung der Richtungsunabhängigkeit bei einer photometrischen Vermessung können Reflexionsnormale Z mit einer diffus und spektral neutral reflektierenden Oberfläche Z.1 versehen sein, um eine wiederholgenaue und vergleichbare Messung von Kennzeichenleuchten 1 zu ermöglichen.

**Figur** 2 zeigt eine Messvorrichtung für die photometrische Vermessung eines von einer Kennzeichenleuchte 1 beleuchteten Reflexionsnormals Z. Die Messvorrichtung umfasst eine bewegliche Positioniereinrichtung 2, eine Haltevorrichtung 3, eine Kamera 4 sowie eine in Figur 2 nicht näher dargestellte Steuer- und Auswerteeinheit.

An der Haltevorrichtung 3 ist das Reflexionsnormal Z angeordnet, wobei dessen reflektierende Oberfläche Z.1 zur Kamera 4 weist. Die Kamera 4 ist in einem vorbestimmten Messabstand L zum Reflexionsnormal Z angeordnet, wobei die optische Achse der Kamera 4 näherungsweise mittig und näherungsweise senkrecht auf die reflektierende Oberfläche Z.1 des Reflexionsnormals Z weist.

In einem Ausführungsbeispiel ist die Kamera 4 so angeordnet und ausgerichtet, dass ihre optische Achse auf der reflektierenden Oberfläche Z.1 innerhalb eines Kreises mit einem Radius von 5 Millimeter um den Flächenschwerpunkt der reflektierenden Oberfläche Z.1 unter einem Winkel von zwischen 85 Grad und 95 Grad auftrifft.

Der Messabstand L ist so gewählt, dass die gesamte reflektierende Oberfläche Z.1 vorzugsweise nahezu senkrecht vermessen wird. In einem Ausführungsbeispiel ist der Messabstand L so gewählt, dass das Reflexionsnormal Z innerhalb eines Winkels von höchstens ±5 Grad um die optische Achse der Kamera 4 liegt.

Es sind jedoch auch größere Winkel um die optische Achse der Kamera 4 möglich. Ferner ist es auch möglich, örtlich variierende, insbesondere zum Bildrand hin zunehmende Abweichungen eines von der Kamera 4 aufgefangenen Strahlenbündels von deren optischer Achse dadurch zu korrigieren, dass eine winkelabhängige, und somit auch vom Ort in einem von der Kamera 4 aufgenommenen Leuchtdichtebild B1, B2 abhängige Reflektivität rechnerisch korrigiert wird.

Insbesondere ist die Kamera 4 für photometrische Messungen mittels der Aufnahme von Leuchtdichtebildern B1, B2 eingerichtet und angeordnet, die, wie nachfolgend noch genauer erklärt, die örtliche Verteilung einer photometrischen Messgröße angeben.

Die bewegliche Positioniereinrichtung 2 ist so eingerichtet und angeordnet, dass die davon gehaltene Kennzeichenleuchte 1 relativ zum Reflexionsnormal Z sowohl in die erste Position P1 als auch in die zweite Position P2, entsprechend der in Figur 1 dargestellten Anordnung der beiden Kennzeichenleuchten 1 am Fahrzeug F, gebracht und dort jeweils gehalten werden kann.

Vorzugsweise ist die bewegliche Positioniereinrichtung 2 als Roboter 2, vorzugsweise als Fünfachs- oder als Sechsachsroboter, ausgebildet. Am Ende eines Roboterarmes mit mehreren, gegeneinander drehbeweglichen Segmenten weist der Roboter 2 eine Halterung auf, die zur Aufnahme der Kennzeichenleuchte 1 eingerichtet ist. Die Halterung 2.1 kann als Greifer 2.1 ausgebildet sein.

Die Kamera 4, der Roboter 2 und die Kennzeichenleuchte 1 sind mit einer Steuereinheit 5 verbunden und werden von dieser angesteuert. Die Steuereinheit 5 kann beispielsweise als Personal Computer (PC) ausgebildet sein, der Steckkarten oder universelle Schnittstellen, beispielsweise Universal Serial Bus (USB) und/oder Gigabit Ethernet Schnittstellen, aufweist, die kompatibel zur Kamera 4, zum Roboter 2 und zur Kennzeichenleuchte 1 sind. Die Steuereinheit 5 weist ferner eine Schnittstelle auf, mit der von der Kamera 4 aufgenommene und optional ausgewertete Daten an die Steuereinheit 5 übertragen werden können.

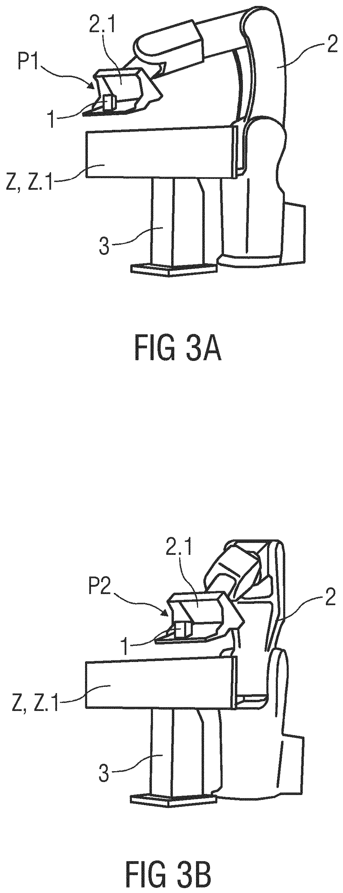

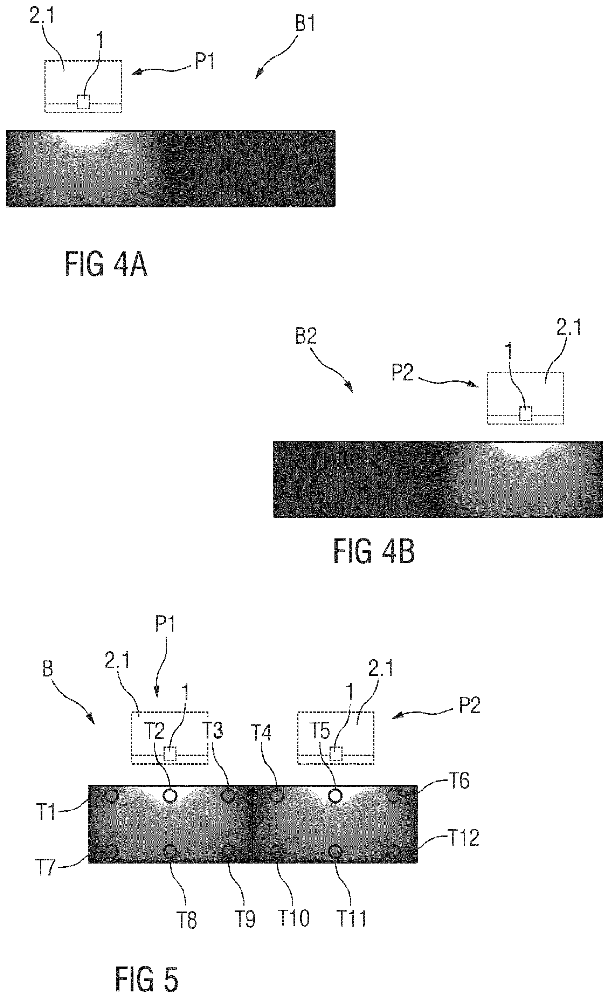

Das Verfahren der photometrischen Vermessung eines von mindestens einer Kennzeichenleuchte 1 beleuchteten Reflexionsnormals Z wird im Folgenden anhand der **Figuren 3A, 3B****,** **4A** und **4B** näher beschrieben.

Die Steuereinheit 5 steuert den Roboter 2 so an, dass die von diesem gehaltene Kennzeichenleuchte 1 an die erste Position P1 bewegt wird, welche in Lage (das heißt: dreidimensionalem Abstand des Mittelpunkts der Kennzeichenleuchte 1) und Ausrichtung (das heißt: Winkellage der Flächennormalen der Kennzeichenleuchte 1 relativ zur reflektierenden Oberfläche Z.1) relativ zum Reflexionsnormal Z mit der ersten Position P1 der am Fahrzeug F montierten Kennzeichenleuchte 1 übereinstimmt, wie in Figur 3A dargestellt.

Nach Erreichen der ersten Position P1 wird durch die Steuereinheit 5 die Kennzeichenleuchte 1 eingeschaltet. Nach einer gewissen, vorbestimmten Einbrennzeit wird durch die Steuereinheit 5 die Aufnahme eines ersten Leuchtdichtebildes B1 durch die Kamera 4 ausgelöst, wie in Figur 4A dargestellt. Die Einbrennzeit ist so gewählt, dass das Leuchtmittel der Kennzeichenleuchte 1 nach Ablauf der Einbrennzeit eine stabile, dem Verhalten im Dauerbetrieb des Leuchtmittels entsprechende Leuchtdichteverteilung abgibt.

Das erste Leuchtdichtebild B1 stellt eine zweidimensionale, das gesamte Reflexionsnormal Z abdeckende Verteilung eines photometrischen Parameters, beispielsweise die Verteilung der Leuchtdichte über dem Reflexionsnormal Z, dar, die sich bei einer Beleuchtung des Reflexionsnormals Z durch die Kennzeichenleuchte 1 an der ersten Position P1 ergibt.

Nach Aufnahme des ersten Leuchtdichtebildes B1 löst die Steuereinheit 5 das Verfahren der Kennzeichenleuchte 1 an die zweite Position P2 aus, welche in Lage und Ausrichtung relativ zum Reflexionsnormal Z mit der zweiten Position P2 der am Fahrzeug F montierten Kennzeichenleuchte 1 übereinstimmt, wie in Figur 3B dargestellt.

Optional kann beim Verfahren die Kennzeichenleuchte 1 ausgeschaltet werden und wird dann mindestens für die vorbestimmte Einbrennzeit wieder eingeschaltet, nachdem die zweite Position P2 erreicht ist.

Danach wird durch die Steuereinheit 5 die Aufnahme eines zweiten Leuchtdichtebildes B2 durch die Kamera 4 ausgelöst, wie in Figur 4B dargestellt. Das zweite Leuchtdichtebild B2 stellt eine zweidimensionale, das gesamte Reflexionsnormal Z abdeckende Verteilung eines photometrischen Parameters dar, die sich bei einer Beleuchtung des Reflexionsnormals Z durch die Kennzeichenleuchte 1 an der zweiten Position P2 ergibt.

Die Leuchtdichtebilder B1, B2 weisen im Wesentlichen deckungsgleiche Strukturen auf. Beispielsweise wird in den Leuchtdichtebildern B1, B2 die reflektierende, von der an der jeweiligen Position P1, P2 angeordneten Kennzeichenleuchte 1 beleuchtete Oberfläche Z.1 zwar mit unterschiedlichem Helligkeitsverlauf, aber mit deckungsgleichem Umriss erfasst. Ebenso wird die Haltevorrichtung 3 in beiden Leuchtdichtebildern B1, B2 deckungsgleich erfasst. Die Halterung 2.1 und die davon gehaltene Kennzeichenleuchte 1 sind dagegen in beiden Leuchtdichtebildern B1, B2 an verschiedenen Orten erfasst.

Das erste Leuchtdichtebild B1 und das zweite Leuchtdichtebild B2 werden beispielsweise pixelweise zu einem Gesamtbild B aufsummiert, das in **Figur 5** schematisch dargestellt ist. Für die weitere Auswertung ist nur der Bereich des Gesamtbildes B relevant, in dem die Oberfläche Z.1 erfasst ist. Dieser Bereich des Gesamtbildes B stellt eine zweidimensionale, das gesamte Reflexionsnormal Z abdeckende photometrische Verteilung dar, die sich unter simultaner Beleuchtung durch eine an der ersten Position P1 und eine weitere, an der zweiten Position P2 angeordnete Kennzeichenleuchte 1 ergeben würde.

Die Ermittlung des Gesamtbildes B, beispielsweise durch pixelweise Aufsummierung des ersten Leuchtdichtebildes B1 und des zweiten Leuchtdichtebildes B2, kann durch eine als Smart-Kamera ausgebildete Kamera 4 erfolgen. In einer Ausführungsform kann dieErmittlung des Gesamtbildes B auch durch die Steuereinheit 5 erfolgen, nach dem die einzelnen Leuchtdichtebilder B1, B2 dorthin übertragen wurden.

In weiteren Ausführungsformen kann die von dem Roboter 2 gehaltene Kennzeichenleuchte 1 an weitere, in den Figuren 3A und 3B nicht näher bezeichnete Positionen gebracht werden. Beispielsweise kann die Kennzeichenleuchte 1 zusätzlich unterhalb und/oder seitlich des Reflexionsnormals Z gehalten werden. Für jede dieser weiteren Positionen wird jeweils ein weiteres Leuchtdichtebild mit der Kamera 4 aufgenommen.

Aus der Gesamtheit aller aufgenommenen Leuchtdichtebilder B1, B2 wird durch die Kamera 4 oder durch die Steuereinheit 5 ein Gesamtbild B gebildet. In einer Ausführungsform werden die Leuchtdichtebilder B1, B2 pixelweise aufsummiert. Bei einer Aufsummierung können unterschiedliche Leuchtdichtebilder B1, B2 unterschiedlich gewichtet werden. Es ist auch möglich, Leuchtdichtebilder B1, B2 vor einer Überlagerung zu einem Gesamtbild B zu registrieren (das heißt: einer affinen Koordinatentransformation zu unterziehen) und/oder zu filtern. Eine Filterung kann linear erfolgen, beispielsweise als Tiefpassfilterung oder Glättung, oder nicht-linear erfolgen, beispielsweise als Medianfilterung. Darüber hinaus sind dem Fachmann viele andere Bildverarbeitungsverfahren bekannt, welche auf die Leuchtdichtebilder B1, B2 vor einer Überlagerung zu einem Gesamtbild B angewendet werden können.

Dadurch wird die photometrische Verteilung ermittelt, die sich bei einer Beleuchtung des Reflexionsnormals Z durch eine Mehrzahl von Kennzeichenleuchten 1 ergibt, die jeweils an der ersten Position P1, an der zweiten Position P2 und optional an den weiteren, nicht näher dargestellten Positionen angeordnet sind, wobei die Folge der Positionen P1, P2 von der Steuereinheit 5 vorgegeben ist.

Durch das erfindungsgemäße Verfahren ist es somit in sehr einfacher Weise möglich, durch Umprogrammierung oder Parametrisierung der Steuereinheit 5 photometrische Verteilungen für eine Vielzahl von Anordnungsvarianten zu ermitteln, bei denen Kennzeichenleuchten 1 in flexibler Anzahl an prinzipiell beliebigen Positionen um das Reflexionsnormal Z angeordnet sind. Beispielsweise können ohne Änderung des Messaufbaus photometrische Verteilungen ermittelt werden, die bei der Beleuchtung eines Reflexionsnormals Z für ganz unterschiedliche Fahrzeugtypen auftreten, bei denen der gleiche Typ einer Kennzeichenleuchte 1 verwendet wird.

Ferner können in einer Ausführungsform in dem Gesamtbild B Bildbereiche T1 bis T12 vorbestimmt sein. Vorliegend sind die Bildbereiche T1 bis T12 nichtüberlappend angeordnet. Es sind aber auch Anordnungen möglich, bei denen sich Bildbereiche T1 bis T12 teilweise überlappen.

Beispielsweise können kreisförmige Bildbereiche T1 bis T12 durch jeweils einen Mittelpunkt und einen Radius vorbestimmt sein und jeweils alle Pixel des Gesamtbilds B umfassen, welche innerhalb des jeweiligen Radius um den jeweiligen Mittelpunkt liegen, wobei die Radien aller Bildbereiche T1 bis T12 gleich sein können.

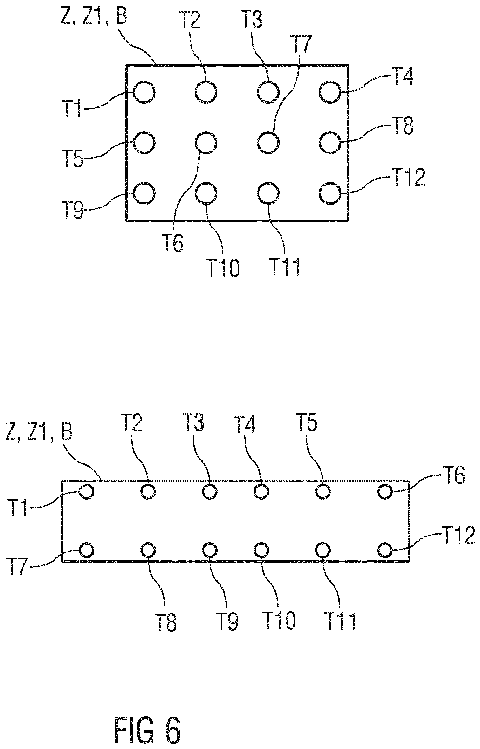

**Figur 6** zeigt schematisch mögliche Anordnungen von Bildbereichen T1 bis T12, die an unterschiedliche geometrische Ausdehnungen von dem Reflexionsnormal Z derart angepasst sind und normativ oder regulatorisch vorgegeben sein können, dass die Grauwertverteilung eines Gesamtbildes B des Reflexionsnormals Z durch die jeweiligen Bildbereiche T1 bis T12 näherungsweise äquidistant abgetastet wird, wobei die Bildbereiche T1 bis T12 näherungsweise vollständig über das Reflexionsnormal Z verteilt sind.

Bei dieser Ausführungsform werden die Grauwerte eines Bildbereiches T1 bis T12, die durch Aufsummierung aller Leuchtdichtebilder B1, B2 ermittelt wurden, zu jeweils einem Bildbereichsmittelwert gemittelt. Jeder dieser Bildbereichsmittelwerte ist somit einer mittleren Leuchtdichte für den jeweiligen Bildbereich T1 bis T12 zugeordnet.

Diese Ausführungsform bietet den Vorteil, dass anstelle einer flächigen, zweidimensionalen Grauwertverteilung innerhalb des Gesamtbildes B die Angabe von diskreten, jeweils den Bildbereichen T1 bis T12 zugeordneten Bildbereichsmittelwerte zur Beschreibung der Leuchtdichteverteilung über dem Reflexionsnormal Z ausreicht. Dadurch ist in besonders einfacher Weise ein Vergleich der Ausleuchtung eines Reflexionsnormals Z durch eine Anordnung von Kennzeichenleuchten 1 mit den Vorgaben einer Norm und/oder mit einer Ausleuchtung möglich, die sich bei einer anderen Anordnung von Kennzeichenleuchten 1 ergibt.

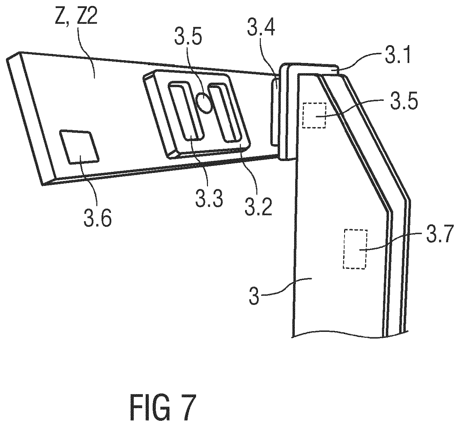

Bei einer in **Figur 7** schematisch dargestellten Ausführungsform weist die Haltevorrichtung 3 einen Haltesockel 3.1 auf, der formschlüssig komplementär zu einer Haltefassung 3.2 ausgebildet ist. Die Haltefassung 3.2 ist auf der der Oberfläche Z.1 des Reflexionsnormals Z gegenüberliegenden Rückseite Z.2 angeordnet.

Beispielsweise kann die Haltefassung 3.2 Ausnehmungen 3.3 aufweisen, die korrespondierend zu Zapfen 3.4 an dem Haltesockel 3.1 geformt sind. Insbesondere sind die Haltefassung 3.2 und der Haltesockel 3.1 so geformt und ausgebildet, dass die Haltefassung 3.2 mit geringem oder keinem Spiel auf den Haltesockel 3.1 aufgesteckt werden kann und von diesem in einer vorbestimmten, vorzugsweise lotrechten Montageposition gehalten wird. Zusätzlich können an der Haltefassung 3.2 und an dem Haltesockel 3.1 jeweils mindestens ein Magnet 3.5 so angeordnet sein, dass die Haltefassung 3.2 durch die Kraftwirkung der Magneten 3.5 in die Montageposition am Haltesockel 3.1 gezogen und dort gehalten wird.

Ein Vorteil dieser Ausführungsform der Erfindung besteht darin, dass das Reflexionsnormal Z sehr leicht an der Haltevorrichtung 3 gewechselt werden kann. Beispielsweise kann das Reflexionsnormal Z mit unterschiedlicher Geometrie besonders leicht und schnell gewechselt werden, indem ein Reflexionsnormal Z mit einer ersten Geometrie von der Haltevorrichtung 3 abgezogen wird und ein Reflexionsnormal Z mit einer zweiten Geometrie auf die Haltevorrichtung 3 aufgesteckt wird. Sodann wird die Steuereinheit 5 derart umprogrammiert oder, beispielsweise durch Auswahl eines bereits vorliegenden, zur zweiten Geometrie passenden Steuer- und Auswerteprogramms, parametrisiert, dass die Kennzeichenleuchte 1 an diejenigen Positionen P1, P2 gefahren wird, die für die Beleuchtung eines Reflexionsnormals Z mit der zweiten Geometrie vorgesehen sind.

Aus den entsprechend an jeder der jeweiligen Positionen P1, P2 aufgenommenen Leuchtdichtebildern B1, B2 wird sodann durch Aufsummierung ein Gesamtbild B bestimmt, wobei Ort und Ausdehnung des Reflexionsnormals Z innerhalb des Gesamtbildes B anhand der ausgewählten zweiten Geometrie des Reflexionsnormals Z festgelegt sind.

Optional wird, soweit von dem ausgewählten Steuer- und Auswerteprogramm vorgesehen, das Gesamtbild B durch Ermittlung von Bildbereichsmittelwerten entsprechend einer vorbestimmten Anordnung von Bildbereichen T1 bis T12 ausgewertet.

Somit beschränkt sich der Messaufwand bei dieser Ausführungsform auf das manuelle An- und Abstecken des Reflexionsnormals Z an der Haltevorrichtung 3 und die manuelle Auswahl eines zur Geometrie des jeweils aufgesteckten Reflexionsnormals Z kompatiblen Steuer- und Auswerteprogramms an der Steuereinheit 5.

Gegenüber aus dem Stand der Technik bekannten Messvorrichtungen, bei denen sowohl das Reflexionsnormal Z als auch eine Mehrzahl von Kennzeichenleuchten 1 gegenüber einer Haltevorrichtung 3 fixiert, beispielsweise verschraubt, sind, kann eine große Anzahl von Reflexionsnormal Z mit unterschiedlichen Abmessungen sehr leicht und in kurzer Zeit photometrisch vermessen werden.

In einer weiteren Ausführungsform kann die Positioniereinrichtung 2 als Roboter 2 ausgebildet sein, der dafür eingerichtet ist, ein Reflexionsnormal Z von einer nicht näher dargestellten Ablageposition, beispielsweise einem Regal, aufzunehmen und auf die Haltevorrichtung 3 aufzustecken, nach erfolgter Messung abzustecken und wieder in der Ablageposition abzulegen. Beispielsweise kann für eine leichte Aufnahme und Ablage des Reflexionsnormals Z die Halterung 2.1 eines solchen Roboters 2 mit einem Magnetschalter versehen sein.

Bei einer Ausführungsform der Erfindung ist an der Haltefassung 3.2 ein radio frequency identification (RFID) Transponder 3.6 angeordnet. An dem Haltesockel 3.1 ist ein RFID Lesegerät 3.7 angeordnet, das zur Identifizierung des RFID Transponders 3.6 eingerichtet ist.

Bei dieser Ausführungsform wird auf der Steuereinheit 5 eine Zuordnungstabelle eingerichtet, mit der jeweils einem RFID Transponder 3.6 die Geometrie (das heißt: die Abmessungen) des Reflexionsnormals Z zugeordnet wird, das an der Haltefassung 3.2 angeordnet ist, welche den jeweiligen RFID Transponder 3.6 trägt. Beim Aufstecken der Haltefassung 3.2 mit dem Reflexionsnormal Z wird der RFID Transponder 3.6 ausgelesen und dessen Identifikation an die Steuereinheit 5 übertragen. Auf der Steuereinheit 5 werden anhand der Zuordnungstabelle diejenigen Bildbereiche T1 bis T12 eingestellt, in denen gemäß der auf das zugeordnete Reflexionsnormal Z und dessen Geometrie anwendbaren Norm die Leuchtdichtebilder B1, B2 auszuwerten sind.

Somit kann bei dieser Ausführungsform die manuelle Auswahl oder Parametrisierung des Auswerteprogramms, das heißt: die manuelle Angabe der auszuwertenden Bildbereiche T1 bis T12 und/oder die manuelle Eingabe der für die Vermessung des eingespannten Reflexionsnormals Z anzuwendenden Norm entfallen und der Messvorgang zusätzlich beschleunigt werden. Zudem wird dadurch die Gefahr von Fehleingaben, beispielsweise die Gefahr der Auswahl einer falschen Norm, welche nicht zur Geometrie des aufgesteckten Reflexionsnormals Z passt, verringert.

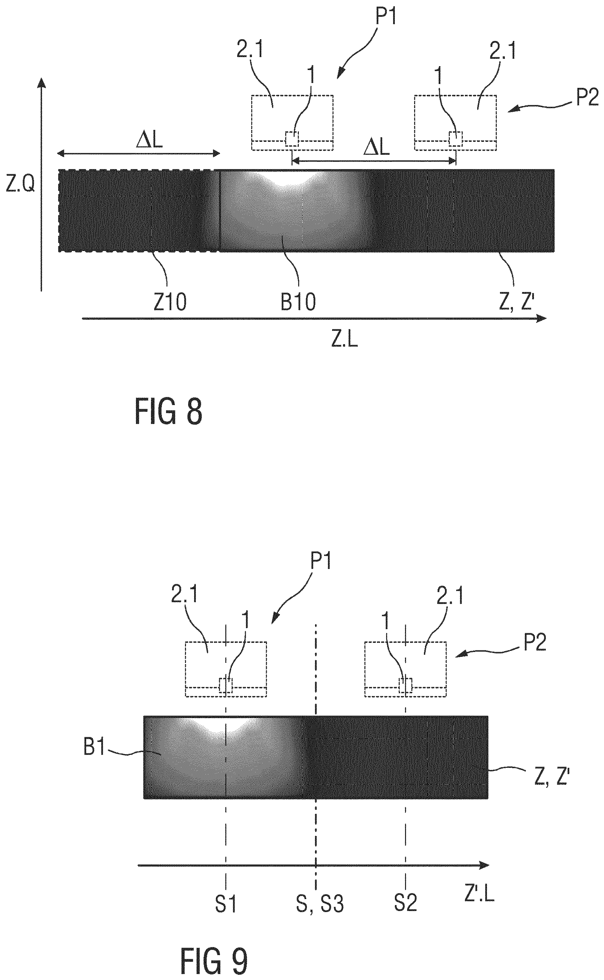

Figur 8 erläutert eine Weiterbildung der Erfindung gegenüber dem anhand von Figuren 4A, 4B und 5 erklärten Verfahren.

Gemäß diesem oben erklärten Verfahren wird ein Gesamtbild B durch sequenzielle Messung und Überlagerung von Leuchtdichtebildern B1, B2 ermittelt. Das Gesamtbild B beschreibt die Leuchtdichteverteilung, die von beispielhaft zwei, an den Positionen P1, P2 angeordneten Kennzeichenleuchten 1 erzeugt wird.

Demgegenüber wird in der Ausführungsform nach Figur 8 ein erweitertes Leuchtdichtebild B10 an nur einer (hier beispielhaft der ersten) Position P1 aufgenommen. Das erweiterte Leuchtdichtebild B10 wird rechnerisch an die zweite Position P2 übertragen, indem die Grauwertverteilung entlang der Längsrichtung Z'.L um den Längsabstand ΔL zwischen der zweiten Position P2 und der ersten Position P1 verschoben wird.

Das so verschobene erweiterte Leuchtdichtebild B10 wird mit dem erweiterten Leuchtdichtebild B10 an der ursprünglichen Messposition (der ersten Position P1) zum Gesamtbild B überlagert.

Damit die Längsausdehnung auch des an die zweite Position P2 verschobenen erweiterten Leuchtdichtebildes B10 den gesamten Bereich des Kennzeichens Z' überdeckt, welches von den Kennzeichenleuchten 1 beleuchtet werden soll, ist ein gegenüber dem Reflexionsnormal Z erweitertes Reflexionsnormal Z10 mit einer verlängerten Längsausdehnung erforderlich, das als Auffangebene des erweiterten Leuchtdichtebildes B10 dient. Die Längsausdehnung des erweiterten Reflexionsnormals Z10 ist, von der ersten Position P1 ausgehend nach links, um mindestens den Längsabstand ΔL zwischen der ersten und der zweiten Position P1, P2 verlängert.

Ein Vorteil dieser Ausführungsform besteht darin, dass die Messung des zweiten Leuchtdichtebildes B2 an der zweiten Position P2 (und potenziell auch die Messung weiterer Leuchtdichtebilder an nicht näher dargestellten weiteren Positionen) eingespart und durch die rechnerische Übertragung des erweiterten Leuchtdichtebildes B10 ersetzt werden kann. Dadurch kann die Messzeit verkürzt werden.

In analoger Weise können Messungen von mehreren Leuchtdichtebildern B1, B2 an vertikal (entlang einer Querrichtung Z'.Q) beabstandeten, in Figur 8 nicht näher eingezeichneten Positionen auf die Messung eines einzigen erweiterten Leuchtdichtebildes B10 reduziert werden, welches auf ein entsprechend dem vertikalen Abstand zwischen den Positionen entlang der Querrichtung Z'.Q verlängertes erweitertes Reflexionsnormal Z10 abgebildet wird. Auch Messungen an mehreren vertikal und horizontal beabstandeten Positionen können auf diese Weise auf die Messung an einer einzigen Position P1, P2 reduziert werden.

Figur 9 erläutert eine weitere, gegenüber der Weiterbildung nach Figur 8 vereinfachte Ausführungsform des Verfahrens zur Reduktion der Anzahl von Messungen, welche eine Symmetrie der von einer Kennzeichenleuchte 1 generierten Leuchtdichteverteilung auf einem Kennzeichen Z' oder einem Reflexionsnormal Z ausnutzt.

Eine Kennzeichenleuchte 1 erzeugt an der ersten Position P1 ein zu einer ersten Symmetrieachse S1 spiegelsymmetrisches erstes Leuchtdichtebild B1, wenn die Kennzeichenleuchte 1 senkrecht zur Längsrichtung Z'.L abstrahlt. In gleicher Weise würde eine an der zweiten Position P2 angeordnete Kennzeichenleuchte 1 ein (in Figur 9 nicht dargestelltes) zweites Leuchtdichtebild B2 erzeugen, das spiegelsymmetrisch zur zweiten Symmetrieachse S2 ist.

Dieses zweite Leuchtdichtebild B2 ergibt sich jedoch auch rechnerisch aus dem ersten Leuchtdichtebild B1 durch Spiegelung an einer dritten Symmetrieachse S3, welche entlang der Mittelsenkrechten auf der Verbindungslinie zwischen der ersten und der zweiten Position P1, P2 verläuft.

Die Messung an der zweiten Position P2 wird somit dadurch eingespart, dass das erste Leuchtdichtebild B1 (welches gemessen wird, wenn die Kennzeichenleuchte 1 in der ersten Position P1 angeordnet wurde), an der dritten Symmetrieachse S3 gespiegelt wird und anschließend das erste Leuchtdichtebild B1 und dessen Spiegelung zu dem Gesamtbild B überlagert werden.

Ein Vorteil gegenüber der anhand von Figur 8 erläuterten Weiterbildung des Verfahrens besteht darin, dass ein Reflexionsnormal Z mit gleichen Abmessungen verwendet werden kann wie das Kennzeichen Z'.

Diese Ausführungsform des Verfahrens kann auch dann angewendet werden, wenn die Abstrahlrichtungen der Kennzeichenleuchte 1 an der ersten Position P1 und an der zweiten Position P2 zwar nicht senkrecht zur Längsrichtung Z'.L, aber spiegelsymmetrisch zu einer Symmetrieebene S angeordnet sind, welche senkrecht auf dem Reflexionsnormal Z steht und durch die dritte Symmetrieachse S3 verläuft. In einer solchen Anordnung sind zwar das erste und zweite Leuchtdichtebild B1, B2 nicht symmetrisch zur jeweiligen Symmetrieachse S1, S2, jedoch zueinander symmetrisch bezogen auf die dritte Symmetrieachse S3.

In analoger Weise können beliebige andere Symmetrien, beispielsweise symmetrisch in Querrichtung Z'.Q angeordnete Positionen P1, P2, zur Einsparung von Messungen ausgenutzt werden. Es ist auch möglich, die anhand von Figur 8 erläuterte Ausführungsform einer Verschiebung eines erweiterten Leuchtdichtebildes B10 an eine andere Position mit der Ausnutzung von Symmetrien in der Anordnung von Positionen P1, P2 zu kombinieren.

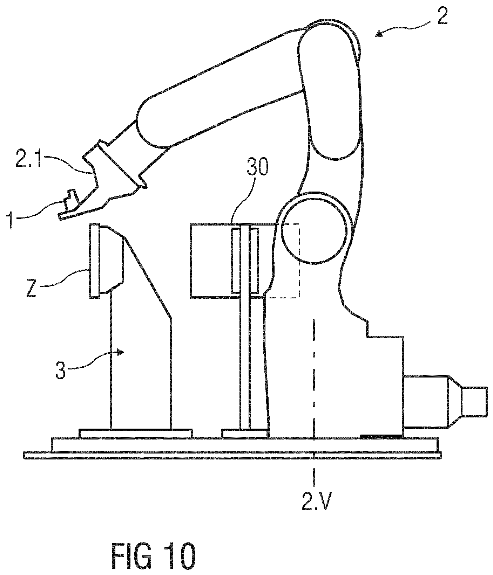

Figur 10 erklärt einen weiteren Aspekt der Erfindung, bei dem korrespondierend zur Haltevorrichtung 3 ein Messdummy 30 bereitgestellt wird, das in den äußeren Abmessungen zu der Haltevorrichtung 3 mit eingesetztem Reflexionsnormal Z gleich gestaltet ist.

Das Messdummy 30 ist so ausgebildet, dass bei einer Kollision eines Elements der Positioniereinrichtung 2, die vorliegend als Roboter ausgeführt ist, die Positioniereinrichtung 2, insbesondere deren Halterung 2.1 und die darin geführte Kennzeichenleuchte 1 unbeschädigt bleiben.

Beispielsweise ist das Messdummy 30 aus einem flexiblen Kunststoff gefertigt, der bei Berührung nachgibt. Alternativ oder zusätzlich kann das Messdummy 30 auch aus einem Material gefertigt sein, das bereits unter Einwirkung einer Kraft zerstört wird, welche zur Beschädigung der Positioniereinrichtung 2 oder der Kennzeichenleuchte 1 noch nicht ausreicht.

Durch die gleichen Abmessungen des Messdummys 30 kann ein für die Vermessung des Reflexionsnormals Z in der Haltevorrichtung 3 vorgesehener Bewegungsablauf der Positioniereinrichtung 2 zunächst an dem Messdummy 30 getestet werden. Das Messdummy 30 wird hierzu so angeordnet, dass die Haltevorrichtung 3 mit dem Reflexionsnormal Z außerhalb des Bereichs liegt, der bei einem auf das Messdummy 30 übertragenen Bewegungsablauf überstrichen wird.

Beispielsweise kann das Messdummy 30 gegenüber der Haltevorrichtung 3 um eine vertikale Drehachse 2.V der Positioniereinrichtung 2 gedreht angeordnet werden. Dann wird zunächst die Positioniereinrichtung 2 um den entsprechenden Winkelversatz um die vertikale Drehachse 2.V von der normalen, der Haltevorrichtung 3 zugewandten Messposition in eine dem Messdummy 30 zugewandte Validierungsposition verdreht. Anschließend wird der für die Vermessung des Reflexionsnormals Z geplante Bewegungsablauf identisch ausgeführt.

Bevorzugt beträgt der Winkelversatz zwischen der Haltevorrichtung 3 und dem Messdummy 30 90 Grad oder 180 Grad. Es sind aber auch andere Anordnungen des Messdummys 30 möglich, sofern dabei sichergestellt ist, dass die von der Validierungsposition aus abgefahrene Bewegungsbahn kollisionsfrei zur Haltevorrichtung 3 verläuft.

Gemäß diesem Aspekt der Erfindung ist es möglich, auf besonders kostengünstige und sichere Weise Fehler bei der Planung des Bewegungsablaufs der Positioniereinrichtung 2 vor einer Messung festzustellen und Schäden zu vermeiden, die durch einen fehlerhaft geplanten Bewegungsablauf an der Positioniereinrichtung 2, der Kennzeichenleuchte 1, der Haltevorrichtung 3 und/oder dem Reflexionsnormal Z verursacht werden könnten.

### BEZUGSZEICHENLISTE

- 1: Kennzeichenleuchte
- 2: Positioniereinrichtung, Roboter
- 2.1: Halterung, Greifer
- 3: Haltevorrichtung
- 3.1: Haltesockel
- 3.2: Haltefassung
- 3.3: Ausnehmung
- 3.4: Zapfen
- 3.5: Magnet
- 3.6: RFID Transponder
- 3.7: RFID Lesegerät
- 4: Kamera
- 5: Steuereinheit
- 30: Messdummy

- B1, B2: erstes, zweites Leuchtdichtebild
- B10: erweitertes Leuchtdichtebild
- B: Gesamtbild
- F: Fahrzeug
- L: Messabstand
- ΔL: Längsabstand
- P1, P2: erste, zweite Position
- S: Symmetrieebene
- S1, S2, S3: erste, zweite, dritte Symmetrieachse
- T1 bis T12: Bildbereich
- Z': Kennzeichen
- Z'.1: Oberfläche
- Z'.L: Längsrichtung
- Z'.Q: Querrichtung
- Z: Reflexionsnormal
- Z.1: Oberfläche
- Z.2: Rückseite
- Z10: erweitertes Reflexionsnormal

## Patentansprüche

1. Verfahren zur photometrischen Vermessung eines von einer Kennzeichenleuchte (1) beleuchteten Reflexionsnormals (Z), wobei
- eine mittels einer Steuereinheit (5) auslösbare Kamera (4) relativ zu einer für die Aufnahme eines Reflexionsnormals (Z) eingerichteten Haltevorrichtung (3) derart angeordnet und ausgerichtet wird, dass ein von der Kamera (4) aufgenommenes Leuchtdichtebild (B1, B2) mindestens die reflektierende Oberfläche (Z.1) eines von der Haltevorrichtung (3) aufgenommenen Reflexionsnormals (Z) überdeckt,
- die Kennzeichenleuchte (1) in einer mittels der Steuereinheit (5) bewegbaren Positioniereinrichtung (2) angeordnet wird,
- das Reflexionsnormal (Z) in der Haltevorrichtung (3) derart angeordnet wird, dass eine reflektierende Oberfläche (Z.1) des Reflexionsnormals (Z) von der Kamera (4) erfasst wird,
- mittels der Steuereinheit (5) die Positioniereinrichtung (2) derart angesteuert wird, dass die darin angeordnete Kennzeichenleuchte (1) an mindestens eine angesteuerte Position (P1, P2) relativ zu dem in der Haltevorrichtung (3) angeordneten Reflexionsnormal (Z) verfahren und dort gehalten wird, wobei
- in jeder Position (P1, P2) mittels der Steuereinheit (5) bei eingeschalteter Kennzeichenleuchte (1) die Aufnahme mindestens eines Leuchtdichtebildes (B1, B2) durch die Kamera (4) ausgelöst wird und
- ein Gesamtbild (B) durch Überlagerung mindestens eines an der angesteuerten Position (P1, P2) aufgenommenen Leuchtdichtebildes (B1, B2) mit mindestens einem daraus für eine zweite Position berechneten Leuchtdichtebild oder durch Überlagerung mehrerer an verschiedenen angesteuerten Positionen aufgenommener Leuchtdichtebilder (B1, B2) gebildet wird.

2. Verfahren nach einem der vorhergehenden Ansprüche, **dadurch gekennzeichnet, dass** das Reflexionsnormal (Z) relativ zur Kamera (4) so angeordnet wird, dass jeder Punkt auf der reflektierenden Oberfläche (Z.1) unter einem Winkel von höchstens 40 Grad, bevorzugt unter einem Winkel von höchstens 5 Grad relativ zur optischen Achse der Kamera (4) erscheint und wobei das mindestens eine Leuchtdichtebild (B1, B2) durch projektive Entzerrung auf die Geometrie der reflektierenden Oberfläche (Z.1) des Reflexionsnormals (Z) angepasst wird.

3. Verfahren nach einem der vorhergehenden Ansprüche, **dadurch gekennzeichnet, dass** aus mindestens einem durch die Kamera (4) für eine erste Position (P1) der Kennzeichenleuchte (1) aufgenommenen Leuchtdichtebild (B1, B10) für mindestens eine zweite oder weitere Position (P2) der Kennzeichenleuchte (1) ein berechnetes Leuchtdichtebild rechnerisch ermittelt wird und das Gesamtbild (B) durch Überlagerung der aufgenommenen Leuchtdichtebilder (B1, B2, B10) und des mindestens einen berechneten Leuchtdichtebildes gebildet wird.

4. Verfahren nach einem der vorhergehenden Ansprüche, **dadurch gekennzeichnet, dass** aufgenommene Leuchtdichtebilder (B1, B2) vor der Überlagerung zu einem Gesamtbild (B) gefiltert und/oder gegeneinander registriert werden.

5. Verfahren nach einem der vorhergehenden Ansprüche, **dadurch gekennzeichnet, dass** das Gesamtbild (B) durch pixelweise Aufsummierung der aufgenommenen, optional gefilterten und/oder gegeneinander registrierten Leuchtdichtebilder (B1, B2) gebildet wird.

6. Verfahren nach einem der vorhergehenden Ansprüche, **dadurch gekennzeichnet, dass** die Aufnahme eines Leuchtdichtebildes (B1, B2) erst ausgelöst wird, nachdem die Kennzeichenleuchte (1) für eine vorbestimmte Einbrenndauer eingeschaltet war.

7. Verfahren nach einem der vorhergehenden Ansprüche, **dadurch gekennzeichnet, dass** in dem Teilbereich des Gesamtbildes (B), der die reflektierende Oberfläche (Z.1) des Reflexionsnormals (Z) abdeckt, Bildbereiche (T1 bis T12) festgelegt werden und zu jedem Bildbereich (T1 bis T12) jeweils ein Bildbereichsmittelwert aus den Pixelwerten des jeweiligen Bildbereichs (T1 bis T12) ermittelt wird.

8. Verfahren nach Anspruch 7, **dadurch gekennzeichnet, dass** das in der Haltevorrichtung (3) gehaltene Reflexionsnormal (Z) identifiziert wird und daraus eine dem Reflexionsnormal (Z) zugeordnete Anordnung von Bildbereichen (T1 bis T12) für die Bildung jeweils eines Bereichsmittelwertes bestimmt wird.

9. Verfahren nach Anspruch 8, **dadurch gekennzeichnet, dass** das Reflexionsnormal (Z) mittels eines radio frequency identification (RFID) Transponders (3.6) identifiziert wird.

10. Verfahren nach Anspruch 8, **dadurch gekennzeichnet, dass** das Reflexionsnormal (Z) identifiziert wird, indem in dem Gesamtbild (B) und/oder in mindestens einem der Leuchtdichtebilder (B1, B2) mindestens ein geometrischer Parameter des abgebildeten Reflexionsnormals (Z) erfasst wird und anhand des mindestens einen geometrischen Parameters ein Typ des Reflexionsnormals (Z) zugeordnet wird.

11. Verfahren nach einem der vorhergehenden Ansprüche, **dadurch gekennzeichnet, dass** in einem der Vermessung des Reflexionsnormals (Z) vorangehenden Validierungsschritt ein zur Vermessung des Reflexionsnormals (Z) geeigneter Bewegungsablauf der Positioniereinrichtung (2) mit darin angeordneter Kennzeichenleuchte (1) relativ zu der Haltevorrichtung (3) geplant und relativ zu einem Messdummy (30) kollisionsfrei ausgeführt wird, welches in den äußeren Abmessungen baugleich zu der Haltevorrichtung (3) mit dem darin aufgenommenen Reflexionsnormal (Z) ausgebildet und so angeordnet ist, dass bei dem relativ zu dem Messdummy (30) ausgeführten Bewegungsablauf eine Kollision mit der Haltevorrichtung (3) und/oder dem Reflexionsnormal (Z) ausgeschlossen ist und bei dem relativ zu der Haltevorrichtung (3) ausgeführten Bewegungsablauf eine Kollision mit dem Messdummy (30) ausgeschlossen ist, wobei das Messdummy (30) so ausgebildet ist, dass die Positioniereinrichtung (2) und/oder die Kennzeichenleuchte (1) bei einer Kollision mit dem Messdummy (30) unbeschädigt bleiben/bleibt.

12. Verfahren zur mehrfachen photometrischen Vermessung mindestens eines von einer Kennzeichenleuchte (1) beleuchteten Reflexionsnormals (Z) in aufeinanderfolgenden Messschritten, wobei
- die Kennzeichenleuchte (1) in einer mittels der Steuereinheit (5) bewegbaren Positioniereinrichtung (2) für die Dauer der aufeinanderfolgenden Messschritte hinweg angeordnet wird und
- in jedem der aufeinanderfolgenden Messschritte jeweils ein von der Kennzeichenleuchte (1) beleuchtetes Reflexionsnormal (Z) mit einem Verfahren nach einem der vorhergehenden Ansprüche photometrisch vermessen wird.

13. Vorrichtung, umfassend eine Steuereinheit (5), eine Haltevorrichtung (3), die zur Aufnahme eines Reflexionsnormals (Z) eingerichtet ist, eine Kamera (4), die zur Aufnahme von Leuchtdichtebildern (B1, B2) eines in der Haltevorrichtung (3) gehaltenen Reflexionsnormals (Z) eingerichtet ist, sowie eine Positioniereinrichtung (2), die zur Aufnahme einer Kennzeichenleuchte (1) eingerichtet ist, wobei die Steuereinheit (5) mit der Kamera (4) und mit der Positioniereinrichtung (2) verbunden ist und zum Verfahren einer von der Positioniereinrichtung (2) aufgenommenen Kennzeichenleuchte (1) an mindestens eine vorbestimmte Position (P1, P2), optional nacheinander an mehrere vorbestimmte Positionen (P1, P2), relativ zu der Haltevorrichtung (3), zum Einschalten der Kennzeichenleuchte (1) sowie zum Auslösen der Aufnahme mindestens eines Leuchtdichtebildes (B1, B2) durch die Kamera (4) eingerichtet ist und wobei die Steuereinheit (5) eingerichtet ist, das Verfahren nach Anspruch 1 auszuführen.

14. Vorrichtung nach Anspruch 13, **dadurch gekennzeichnet, dass** die Haltevorrichtung (3) einen Haltesockel (3.1) und eine Haltefassung (3.2) umfasst, wobei der Haltesockel (3.1) zur lösbaren, formschlüssig-spielfreien Aufnahme der Haltefassung (3.2) ausgebildet ist und wobei die Haltefassung (3.2) zur Aufnahme eines Reflexionsnormals (Z) eingerichtet ist.

15. Vorrichtung nach einem der Ansprüche 13 oder 14, **dadurch gekennzeichnet, dass** die Haltevorrichtung (3) ein RFID Lesegerät (3.7) umfasst, das mit der Steuereinheit (5) verbunden ist und das zum Auslesen eines Identifikators eines an dem Reflexionsnormal (Z) oder an der Haltefassung (3.2) angeordneten RFID Transponders (3.6) und zur Übertragung dieses Identifikators an die Steuereinheit (5) eingerichtet ist, wobei die Steuereinheit (5) dafür eingerichtet ist, aus einem übertragenen Identifikator eine Anordnung von Bildbereichen (T1 bis T12) für die Bildung jeweils eines Bereichsmittelwertes zu bestimmen.

16. Vorrichtung nach einem der Ansprüche 13 bis 15, **dadurch gekennzeichnet, dass** ein in den äußeren Abmessungen baugleich zu der Haltevorrichtung (3) mit dem darin aufgenommenen Reflexionsnormal (Z) ausgebildetes Messdummy (30) relativ zu der Positioniereinrichtung (2) so angeordnet ist, dass ein Bewegungsablauf der Positioniereinrichtung (2) mit darin angeordneter Kennzeichenleuchte (1) zur Vermessung des Reflexionsnormals (Z) ohne Kollision mit dem Messdummy (30) ausführbar ist und dass dieser Bewegungsablauf ohne Kollision mit der Haltevorrichtung (3) und dem darin aufgenommenen Reflexionsnormal (Z) ausführbar ist, wenn er auf das Messdummy (30) übertragen wird, wobei das Messdummy (30) so ausgebildet ist, dass die Positioniereinrichtung (2) und/oder die Kennzeichenleuchte (1) bei einer Kollision mit dem Messdummy (30) unbeschädigt bleiben/bleibt.

## Claims

1. Method for photometric measurement of a reflection standard (Z) illuminated by a licence-plate lamp (1), wherein
- a camera (4) that is triggerable by means of a control unit (5) is arranged and aligned in such a way relative to a holding apparatus (3) configured to receive a reflection standard (Z) that a luminance image (B1, B2) recorded by the camera (4) covers at least the reflective surface (Z.1) of a reflection standard (Z) received by the holding apparatus (3),
- the licence-plate lamp (1) is arranged in a positioning device (2) that is movable by means of the control unit (5),
- the reflection standard (Z) is arranged in the holding apparatus (3) in such a way that a reflective surface (Z.1) of the reflection standard (Z) is captured by the camera (4),
- the control unit (5) is used to actuate the positioning device (2) in such a way that the licence-plate lamp (1) arranged therein is moved to, and held at, at least one actuated position (P1, P2) relative to the reflection standard (Z) arranged in the holding apparatus (3), wherein
- the recording of at least one luminance image (B1, B2) by the camera (4) is triggered by the control unit (5) in each position (P1, P2) when the licence-plate lamp (1) is switched on, and
- an overall image (B) is formed by superimposing at least one luminance image (B1, B2) recorded at the actuated position (P1, P2) with at least one luminance image, calculated therefrom, for a second position or by superimposing a plurality of luminance images (B1, B2) recorded at different actuated positions.

2. Method according to the preceding claim, **characterized in that** the reflection standard (Z) is arranged relative to the camera (4) in such a way that each point on the reflective surface (Z.1) appears at an angle of no more than 40 degrees, preferably at an angle of no more than 5 degrees, relative to the optical axis of the camera (4), and wherein the at least one luminance image (B1, B2) is adapted to the geometry of the reflective surface (Z.1) of the reflection standard (Z) by projective rectification.

3. Method according to either of the preceding claims, **characterized in that** a calculated luminance image is ascertained by calculation for at least one second or further position (P2) of the licence-plate lamp (1) from at least one luminance image (B1, B10) recorded by the camera (4) for a first position (P1) of the licence-plate lamp (1), and the overall image (B) is formed by superimposing the recorded luminance images (B1, B2, B10) and the at least one calculated luminance image.

4. Method according to any of the preceding claims, **characterized in that** recorded luminance images (B1, B2) are filtered and/or registered with respect to one another before the superposition to form an overall image (B).

5. Method according to any of the preceding claims, **characterized in that** the overall image (B) is formed by pixel-by-pixel summation of the recorded, optionally filtered and/or mutually registered luminance images (B1, B2).

6. Method according to any of the preceding claims, **characterized in that** the recording of a luminance image (B1, B2) is triggered only after the licence-plate lamp (1) has been switched on for a predetermined burning-in period.

7. Method according to any of the preceding claims, **characterized in that** image regions (T1 to T12) are defined in the partial region of the overall image (B) that covers the reflective surface (Z.1) of the reflection standard (Z), and a respective image region mean value is ascertained for each image region (T1 to T12) from the pixel values of the respective image region (T1 to T12).

8. Method according to Claim 7, **characterized in that** the reflection standard (Z) held in the holding apparatus (3) is identified, and an arrangement of image regions (T1 to T12) assigned to the reflection standard (Z) is determined therefrom for the formation of a respective region mean value.

9. Method according to Claim 8, **characterized in that** the reflection standard (Z) is identified by means of a radiofrequency identification (RFID) transponder (3.6).

10. Method according to Claim 8, **characterized in that** the reflection standard (Z) is identified by virtue of at least one geometric parameter of the imaged reflection standard (Z) being captured in the overall image (B) and/or in at least one of the luminance images (B1, B2) and a type of the reflection standard (Z) being assigned on the basis of the at least one geometric parameter.

11. Method according to any of the preceding claims, **characterized in that** in a validation step preceding the measurement of the reflection standard (Z), a movement sequence of the positioning device (2) with a licence-plate lamp (1) arranged therein, said movement sequence being suitable for measuring the reflection standard (Z), is planned relative to the holding apparatus (3) and carried out in a collision-free manner relative to a measurement dummy (30), which is of structurally identical design in terms of the external dimensions to the holding apparatus (3) with the reflection standard (Z) received therein and which is arranged in such a way that, in the movement sequence carried out relative to the measurement dummy (30), a collision with the holding apparatus (3) and/or the reflection standard (Z) is ruled out and, in the movement sequence carried out relative to the holding apparatus (3), a collision with the measurement dummy (30) is ruled out, wherein the measurement dummy (30) is designed in such a way that the positioning device (2) and/or the licence-plate lamp (1) remain/remains undamaged in the event of a collision with the measurement dummy (30).

12. Method for multiple photometric measurements in successive measurement steps of at least one reflection standard (Z) illuminated by a licence-plate lamp (1), wherein
- the licence-plate lamp (1) is arranged in a positioning device (2), which is movable by means of the control unit (5), for the duration of the successive measurement steps, and
- a respective reflection standard (Z) illuminated by the licence-plate lamp (1) is measured photometrically in each of the successive measurement steps using a method according to any of the preceding claims.

13. Apparatus comprising a control unit (5), a holding apparatus (3), which is configured to receive a reflection standard (Z), a camera (4), which is configured to record luminance images (B1, B2) of a reflection standard (Z) held in the holding apparatus (3), and a positioning device (2), which is configured to receive a licence-plate lamp (1), wherein the control unit (5) is connected to the camera (4) and to the positioning device (2) and configured to move a licence-plate lamp (1) received by the positioning device (2) to at least one predetermined position (P1, P2), optionally successively to a plurality of predetermined positions (P1, P2), relative to the holding apparatus (3), to switch on the licence-plate lamp (1) and to trigger the recording of at least one luminance image (B1, B2) by the camera (4), and wherein the control unit (5) is configured to carry out the method according to Claim 1.

14. Apparatus according to Claim 13, **characterized in that** the holding apparatus (3) comprises a holding base (3.1) and a holding mount (3.2), wherein the holding base (3.1) is configured for releasably receiving the holding mount (3.2) in a form-fitting and play-free manner, and wherein the holding mount (3.2) is configured for receiving a reflection standard (Z).

15. Apparatus according to either of Claims 13 and 14, **characterized in that** the holding apparatus (3) comprises an RFID reader (3.7), which is connected to the control unit (5) and which is configured to read out an identifier of an RFID transponder (3.6) arranged on the reflection standard (Z) or on the holding mount (3.2) and to transmit this identifier to the control unit (5), wherein the control unit (5) is configured to determine an arrangement of image regions (T1 to T12) for the formation of a respective region mean value from a transmitted identifier.

16. Apparatus according to any of Claims 13 to 15, **characterized in that** a measurement dummy (30) which is of structurally identical design in terms of the external dimensions to the holding apparatus (3) with the reflection standard (Z) received therein is arranged in such a way relative to the positioning device (2) that a movement sequence of the positioning device (2) with the licence-plate lamp (1) arranged therein is executable for the purpose of measuring the reflection standard (Z) without collision with the measurement dummy (30), and **in that** this movement sequence is executable without collision with the holding apparatus (3) and the reflection standard (Z) received therein if it is transferred to the measurement dummy (30), wherein the measurement dummy (30) is designed in such a way that the positioning device (2) and/or the licence-plate lamp (1) remain/remains undamaged in the event of a collision with the measurement dummy (30).

## Revendications

1. Procédé de mesurage photométrique d'un étalon de réflexion (Z) éclairé par un feu de plaque d'immatriculation (1),
- une caméra (4) qui peut être déclenchée au moyen d'une unité de commande (5) étant disposée et orientée par rapport à un arrangement de maintien (3) conçu pour recevoir un étalon de réflexion (Z) de telle sorte qu'une image de luminance (B1, B2) enregistrée par la caméra (4) recouvre au moins la surface réfléchissante (Z.1) d'un étalon de réflexion (Z) reçu par l'arrangement de maintien (3),
- le feu de plaque d'immatriculation (1) étant disposé dans un dispositif de positionnement (2) qui peut être déplacé au moyen de l'unité de commande (5),
- l'étalon de réflexion (Z) étant disposée dans l'arrangement de maintien (3) de telle sorte qu'une surface réfléchissante (Z.1) de l'étalon de réflexion (Z) est acquise par la caméra (4),
- au moyen de l'unité de commande (5), le dispositif de positionnement (2) étant commandé de telle sorte que le feu de plaque d'immatriculation (1) qui est disposé dans celui-ci est déplacé vers au moins une position commandée (P1, P2) par rapport à l'étalon de réflexion (Z) disposé dans l'arrangement de maintien (3) et y est maintenu,
- dans chaque position (P1, P2), au moyen de l'unité de commande (5) lorsque le feu de plaque d'immatriculation (1) est allumé, l'enregistrement d'au moins une image de luminance (B1, B2) par la caméra (4) étant déclenchée et
- une image globale (B) étant formée par superposition d'au moins une image de luminance (B1, B2) enregistrée au niveau de la position commandée (P1, P2) avec au moins une image de luminance calculée à partir de celle-ci pour une deuxième position, ou par superposition de plusieurs images de luminance (B1, B2) enregistrées à des positions commandées différentes.

2. Procédé selon l'une des revendications précédentes, **caractérisé en ce que** l'étalon de réflexion (Z) est disposé par rapport à la caméra (4) de telle sorte que chaque point sur la surface réfléchissante (Z.1) apparaisse sous un angle maximal de 40 degrés, de préférence sous un angle maximal de 5 degrés par rapport à l'axe optique de la caméra (4), et l'au moins une image de luminance (B1, B2) étant adaptée à la géométrie de la surface réfléchissante (Z.1) de l'étalon de réflexion (Z) par correction projective.

3. Procédé selon l'une des revendications précédentes, **caractérisé en ce qu'**une image de luminance calculée est déterminée mathématiquement pour au moins une deuxième ou d'autres positions (P2) du feu de plaque d'immatriculation (1) à partir d'au moins une image de luminance (B1, B10) enregistrée par la caméra (4) pour une première position (P1) du feu de plaque d'immatriculation (1) et l'image globale (B) est formée par superposition des images de luminance (B1, B2, B10) enregistrées et de l'au moins une image de luminance calculée.

4. Procédé selon l'une des revendications précédentes, **caractérisé en ce que** les images de luminance (B1, B2) enregistrées sont filtrées et/ou enregistrées les unes par rapport aux autres avant la superposition en une image globale (B).

5. Procédé selon l'une des revendications précédentes, **caractérisé en ce que** l'image globale (B) est formée par addition pixel par pixel des images de luminance (B1, B2) enregistrées, éventuellement filtrées et/ou enregistrées les unes par rapport aux autres.

6. Procédé selon l'une des revendications précédentes, **caractérisé en ce que** l'enregistrement d'une image de luminance (B1, B2) n'est déclenché qu'après que le feu de plaque d'immatriculation (1) a été allumé pendant une durée de rodage prédéterminée.

7. Procédé selon l'une des revendications précédentes, **caractérisé en ce que**, dans la zone partielle de l'image globale (B) qui recouvre la surface réfléchissante (Z.1) de l'étalon de réflexion (Z), des zones d'image (T1 à T12) sont définies et qu'une valeur moyenne de zone d'image est respectivement déterminée pour chaque zone d'image (T1 à T12) à partir des valeurs de pixel de la zone d'image (T1 à T12) respective.

8. Procédé selon la revendication 7, **caractérisé en ce que** l'étalon de réflexion (Z) maintenu dans l'arrangement de maintien (3) est identifiée et qu'une disposition de zones d'image (T1 à T12) associée à l'étalon de réflexion (Z) est déterminée à partir de là pour la formation respective d'une valeur moyenne de zone.

9. Procédé selon la revendication 8, **caractérisé en ce que** l'étalon de réflexion (Z) est identifié au moyen d'un transpondeur à identification par radiofréquence (RFID) (3.6).

10. Procédé selon la revendication 8, **caractérisé en ce que** l'étalon de réflexion (Z) est identifié en détectant, dans l'image globale (B) et/ou dans au moins l'une des images de luminance (B1, B2), au moins un paramètre géométrique de l'étalon de réflexion (Z) représenté et en attribuant un type à l'étalon de réflexion (Z) à l'aide de l'au moins un paramètre géométrique.

11. Procédé selon l'une des revendications précédentes, **caractérisé en ce que**, dans une étape de validation précédant le mesurage de l'étalon de réflexion (Z), un déroulement de mouvement approprié pour le mesurage de l'étalon de réflexion (Z) du dispositif de positionnement (2) dans lequel est disposé le feu de plaque d'immatriculation (1) par rapport à l'arrangement de maintien (3) est planifié et exécuté sans collision par rapport à un spécimen de mesure (30), lequel est configuré dans les dimensions extérieures à l'identique de l'arrangement de maintien (3) dans lequel est reçu l'étalon de réflexion (Z) et est disposé de telle sorte que, lors du déroulement de mouvement exécuté par rapport au spécimen de mesure (30), une collision avec l'arrangement de maintien (3) et/ou l'étalon de réflexion (Z) est exclue et lors du déroulement de mouvement exécuté par rapport à l'arrangement de maintien (3), une collision avec le spécimen de mesure (30) est exclue, le spécimen de mesure (30) étant configuré de telle sorte que le dispositif de positionnement (2) et/ou le feu de plaque d'immatriculation (1) ne subit/subissent aucun dommage dans le cas d'une collision avec le spécimen de mesure (30).

12. Procédé de mesurage photométrique multiple d'au moins un étalon de réflexion (Z) éclairé par un feu de plaque d'immatriculation (1) dans des étapes de mesure successives,
- le feu de plaque d'immatriculation (1) étant disposé dans un dispositif de positionnement (2) qui peut être déplacé au moyen de l'unité de commande (5) pendant la durée des étapes de mesure successives et
- dans chacune des étapes de mesure successives, un étalon de réflexion (Z) éclairé par le feu de plaque d'immatriculation (1) faisant respectivement l'objet d'un mesurage photométrique avec un procédé selon l'une des revendications précédentes.

13. Arrangement, comprenant une unité de commande (5), un arrangement de maintien (3) qui est conçu pour recevoir un étalon de réflexion (Z), une caméra (4) qui est conçue pour enregistrer des images de luminance (B1, B2) d'un étalon de réflexion (Z) maintenu dans l'arrangement de maintien (3), ainsi qu'un dispositif de positionnement (2) qui est conçu pour recevoir un feu de plaque d'immatriculation (1), l'unité de commande (5) étant reliée à la caméra (4) et au dispositif de positionnement (2) et étant conçue pour déplacer un feu de plaque d'immatriculation (1) reçu par le dispositif de positionnement (2) vers au moins une position (P1, P2) prédéterminée, éventuellement successivement à plusieurs positions (P1, P2) prédéterminées, par rapport à l'arrangement de maintien(3), pour allumer le feu de plaque d'immatriculation (1) ainsi que pour déclencher l'enregistrement d'au moins une image de luminance (B1, B2) par la caméra (4), et l'unité de commande (5) étant conçue pour mettre en œuvre le procédé selon la revendication 1.

14. Arrangement selon la revendication 13, **caractérisé en ce que** l'arrangement de maintien (3) comprend un socle de maintien (3.1) et une monture de maintien (3.2), le socle de maintien (3.1) étant configuré pour recevoir de manière amovible, par complémentarité de forme et sans jeu la monture de maintien (3.2) et la monture de maintien (3.2) étant conçue pour recevoir un étalon de réflexion (Z).

15. Arrangement selon l'une des revendications 13 ou 14, **caractérisé en ce que** l'arrangement de maintien (3) comprend un lecteur RFID (3.7) qui est relié à l'unité de commande (5) et qui est conçu pour lire un identifiant d'un transpondeur RFID (3.6) disposé sur l'étalon de réflexion (Z) ou sur la monture de maintien (3.2) et pour transmettre cet identifiant à l'unité de commande (5), l'unité de commande (5) étant conçue pour déterminer, à partir d'un identifiant transmis, une disposition de zones d'image (T1 à T12) pour la formation respective d'une valeur moyenne de zone.

16. Arrangement selon l'une des revendications 13 à 15, **caractérisé en ce qu'**un spécimen de mesure (30) configuré dans ses dimensions extérieures à l'identique de l'arrangement de maintien (3) dans lequel est reçu l'étalon de réflexion (Z) est disposé par rapport au dispositif de positionnement (2) de telle sorte qu'un déroulement du mouvement du dispositif de positionnement (2) dans lequel est disposé le feu de plaque d'immatriculation (1) pour le mesurage de l'étalon de réflexion (Z) peut être exécuté sans collision avec le spécimen de mesure (30) et que ce déroulement de mouvement peut être exécuté sans collision avec l'arrangement de maintien (3) dans lequel est reçu l'étalon de réflexion (Z) lorsqu'il est transmis au spécimen de mesure (30), le spécimen de mesure (30) étant configuré de telle sorte que le dispositif de positionnement (2) et/ou le feu de plaque d'immatriculation (1) ne subit/subissent aucun dommage dans le cas d'une collision avec le spécimen de mesure (30).
